(19) Europäisches Patentamt
European Patent Office
Office européen des brevets

(11) **EP 2 475 953 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **10747056.9**

(22) Anmeldetag: **30.08.2010**

(51) Int Cl.:
***G01B 11/00*** *(2006.01)*

(86) Internationale Anmeldenummer:
**PCT/EP2010/062637**

(87) Internationale Veröffentlichungsnummer:
**WO 2011/029740 (17.03.2011 Gazette 2011/11)**

(54) **VORRICHTUNGEN UND VERFAHREN ZUR POSITIONSBESTIMMUNG UND OBERFLÄCHENVERMESSUNG**

DEVICES AND METHODS FOR DETERMINING POSITIONS AND MEASURING SURFACES

DISPOSITIFS ET PROCÉDÉS DE DÉTERMINATION DE POSITION ET DE MESURE DE SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.09.2009 DE 102009040837**

(43) Veröffentlichungstag der Anmeldung:
**18.07.2012 Patentblatt 2012/29**

(73) Patentinhaber: **Carl Zeiss AG**
**73447 Oberkochen (DE)**

(72) Erfinder:
• **SPRUCK, Bernd**
**73563 Mögglingen (DE)**
• **ALVAREZ DIEZ, Cristina**
**73431 Aalen (DE)**
• **BRATTKE, Simon**
**73447 Oberkochen (DE)**
• **WITTIG, Lars-Christian**
**07745 Jena (DE)**
• **RICHTER, Stefan**
**07743 Jena (DE)**
• **GEISSLER, Enrico**
**07749 Jena (DE)**
• **KOOS, Christian**
**76227 Karlsruhe (DE)**
• **SCHMIDT, Oliver**
**73432 Aalen (DE)**
• **HOELLER, Frank**
**73434 Aalen (DE)**

(74) Vertreter: **Sticht, Andreas**
**Kraus & Weisert**
**Patentanwälte PartGmbB**
**Thomas-Wimmer-Ring 15**
**80539 München (DE)**

(56) Entgegenhaltungen:
EP-A2- 1 536 248    WO-A1-03/062744
WO-A2-2010/025845    DE-A1- 10 118 392
US-A1- 2002 143 506    US-A1- 2009 177 438

EP 2 475 953 B1

**Beschreibung**

Die Erfindung betrifft Vorrichtungen und Verfahren zur Positionsbestimmung und zur Oberflächenvermessung. Insbesondere betrifft die vorliegende Erfindung derartige Vorrichtungen und Verfahren, bei welchen optische Messverfahren, beispielsweise mittels eines Lasers, zum Einsatz kommen.

Koordinatenmessgeräte sind ein beispielhaftes Anwendungsgebiet, in dem eine Positionsbestimmung in einem dreidimensionalen Raum mit einer möglichst hohen Genauigkeit wünschenswert ist. Koordinatenmessgeräte weisen typischerweise einen Messkopf auf, der beispielsweise mit einem Taststift oder mit anderer Sensorik ausgestattet sein kann. Zur Bestimmung von Positionen an einer Objektoberfläche wird die Position des Messkopfes und, falls der Taststift beweglich an dem Messkopf gelagert ist, die Position des Taststiftes relativ zum Messkopf bestimmt. Herkömmlich sind zur Bestimmung der Position des Messkopfes Linearmaßstäbe in dem Koordinatenmessgerät vorgesehen, die die Position des Messkopfes indirekt über Verfahrwege der einzelnen Achsen rückmelden. Dies erfordert jedoch einen soliden mechanischen Aufbau, um die Verfälschung von Messergebnissen durch eine vorhandene Lose oder durch mechanische Verformungen zu vermeiden.

Entfernungen können durch die Messung einer von elektromagnetischer Strahlung, beispielsweise Licht, zurückgelegten Weglänge bestimmt werden. Dazu durchläuft die elektromagnetische Strahlung einen Weg zwischen einer Referenzposition und dem Objekt einmal oder mehrfach, so dass aus der von der Strahlung zurückgelegten Weglänge die Entfernung ableitbar ist.

Die Realisierung von Vorrichtungen und Verfahren, bei denen Entfernungen oder Objektpositionen in Räumen von einigen Metern Länge mit einer Genauigkeit im Bereich einiger Mikrometer oder einiger zehn Mikrometer bestimmt werden, stellt eine technische Herausforderung dar. Dies gilt insbesondere, wenn Positionen mit einer hohen Messrate bestimmt werden sollen.

Laserweglängenmessgeräte erlauben die Bestimmung eines Abstands eines Objekts. In K. Minoshima and H. Matsumoto, "High-accuracy measurement of 240-m distance in an optical tunnel by use of a compact femtosecond laser", Applied Optics, Vol. 39, No. 30, pp. 5512-5517 (2000) wird eine Distanzmessung unter Verwendung von optischen Frequenzkämmen beschrieben. Bei diesem Messverfahren wird die Phasenlage einer Signalkomponente der Intensität des Laserstrahl-Frequenzkamms ausgewertet, um eine von dem Laserstrahl zurückgelegte Weglänge zu ermitteln. Die Signalkomponente wird derart gewählt, dass sie mit einer Frequenz oszilliert, die einem typischerweise großen Vielfachen der Repetitionsrate des Laserstrahls entspricht. Die Messung einer Phasendifferenz für eine derartige Signalkomponente erlaubt die Positionsbestimmung in einem so genannten Eindeutigkeitsbereich, der gleich der Lichtgeschwindigkeit geteilt durch die Frequenz der Signalkomponente ist. Um eine Abschätzung für die Weglänge zu erhalten, die diese bereits bis auf den Eindeutigkeitsbereich annähert, wird beispielsweise in der DE 10 2008 045 386.2 (s. auch WO 2010 025 845 A2, beide Dokumente nach der Priorität der vorliegenden Anmeldung veröffenlicht) der Anmelderin vorgeschlagen, sequentiell unterschiedliche Signalkomponenten von erfassten Messsignalen auszuwerten, die mit unterschiedlichen Frequenzen oszillieren. Hierfür wird jedoch zusätzliche Mess- und Auswertezeit benötigt.

Generell wird bei optischen Verfahren zur Positionsbestimmung in einem dreidimensionalen Raum auf Basis von Laufzeitmessungen bzw. Messungen einer Phasendifferenz ein Objekt, dessen Position bestimmt werden soll, mit einem Lichtstrahl, typischerweise einem Laserstrahl, beleuchtet und das von dem Objekt, beispielsweise einem an dem Objekt angebrachten Retroreflektor, reflektierte Licht detektiert. Dabei muss sichergestellt werden, dass das Objekt, beispielsweise ein Messkopf eines Koordinatenmessgeräts wie oben beschrieben, in einem gesamten Meßvolumen von dem Lichtstrahl beleuchtet wird. Herkömmlicherweise wird hierzu der Lichtstrahl mit optischen Elementen so aufgeweitet, dass er das gesamte Messvolumen beleuchtet. Diese Aufweitung führt jedoch dazu, dass nur ein relativ geringer Teil des Laserstrahls von dem Objekt reflektiert wird und somit an einem Detektor eine verglichen mit der eingestrahlten Laserleistung geringe Signalintensität vorliegt.

Bei anderen Verfahren kann in umgekehrter Weise vorgegangen werden, das heißt, ausgehend von dem Objekt, beispielsweise ausgehend von einem an dem Objekt angebrachten Messkopf, werden ein oder mehrere ortsfeste Reflektoren beleuchtet, und das reflektierte Licht wird wiederum an dem Objekt detektiert. Hier muss wiederum sichergestellt werden, dass unabhängig von der Bewegung des Objekts in dem interessierenden Raumbereich der Reflektor oder die Reflektoren erfasst wird beziehungsweise werden. Herkömmlicherweise kann auch in diesem Fall der Lichtstrahl mit optischen Elementen entsprechend aufgeweitet werden, was wiederum zu einer geringen Signalintensität führt.

Grundsätzlich wäre es wünschenswert, die Laserleistung besser auszunutzen, um ein besseres Signal/Rauschverhältnis an einem oder mehreren verwendeten Detektoren zu erzielen und/oder Laser mit geringerer Leistung verwenden zu können.

Ähnliche optische Messverfahren, z.B. mittels Laserlicht, können auch bei der Vermessung von Oberflächen zum Einsatz kommen. Hierbei wird beispielsweise eine zu vermessende Oberfläche mit einem Laser, beispielsweise einem Kurzpulslaser, beleuchtet und das von der Oberfläche reflektierte Licht wird mit einem oder mehreren Detektoren detektiert. Zur dreidimensionalen Vermessung sind dabei mindestens drei unabhängige Detektoren nötig, sollen weniger Raumrichtungen vermessen werden, können auch entsprechend weniger Detektoren verwendet werden.

Auch bei derartigen Vorrichtungen und Verfahren ist es wünschenswert, einen möglichst großen Teil der von der Oberfläche reflektierten Laserleistung mit einem Detektor detektieren zu können, d.h. eine effizientere Ausnutzung einer Beleuchtungsintensität zur Positionsbestimmung oder zur Oberflächenvermessung zu ermöglichen.

Weiterhin ist aus WO 03 062744 A1 bekannt, die Position eines an einem Objekt angeordneten Reflektors zu bestimmen. Dabei wird ein Lichtstrahl über Lenkmittel auf den Reflektor gerichtet und das rückreflektierte Licht detektiert. Die Positionsbestimmung erfolgt durch Abstandsmessung mit einem Lasersystem und die Winkelmessung durch einen Positionsdetektor. Zur Ansteuerung der Lenkmittel wird ein separater Positionsdetektor verwendet.

Die Erfindung stellt hierzu vereinfachte Vorrichtungen und Verfahren bereit. Diese Aufgabe wird gelöst durch eine Vorrichtung nach Anspruch 1 und ein Verfahren nach Anspruch 10. Die abhängigen Ansprüche 2-9 definieren weitere Ausführungen der Vorrichtung.

Gemäß einem Aspekt der Erfindung wird eine Vorrichtung zur Bestimmung der Position eines Objekts in einem Raumbereich bereitgestellt, umfassend: mindestens eine Lichtquelle zum Erzeugen mindestens eines Lichtstrahls, Lenkmittel zum Lenken des Lichtstrahls zu einem Reflektor, wobei die Form des Lichtstrahls derart gewählt ist, dass der Lichtstrahl nicht einen gesamten Bereich, in welchem sich der Reflektor befinden kann, erfasst, Detektormittel zum Detektieren des von dem Reflektor reflektierten Lichtstrahls, Auswertemittel zum Bestimmen einer Position des Objekts auf Basis des von den Detektormitteln detektierten reflektierten Lichtstrahls, und Steuermittel zum Ansteuern der Lenkmittel derart, dass der mindestens eine kegelförmige Lichtstrahl auf denjenigen Teil des Bereichs gerichtet ist, in welchem sich der Reflektor befindet, dadurch gekennzeichnet, dass die Steuermittel ausgestaltet sind, die Lenkmittel in Abhängigkeit von einer Amplitude eines Signals der Detektormittel anzusteuern.

Durch das Vorsehen der Lenkmittel ist es nicht nötig, dass der Lichtstrahl ein gesamtes gewünschtes Messvolumen bzw. Volumen, in dem sich der Reflektor relativ zu den Lenkmitteln befinden kann, ausleuchtet. Somit kann die Intensität der Beleuchtung der Beleuchtungseinrichtung effizienter genutzt werden.

Die Vorrichtung kann eine Optik zum Aufweiten des Lichtstrahls umfassen.

Die mindestens eine Lichtquelle kann einen oder mehrere Kurzpulslaser umfassen. Zur dreidimensionalen Positionsbestimmung kann die mindestens eine Lichtquelle dabei insbesondere drei Lichtstrahlen erzeugen, wobei hierzu auch ein Strahl einer einzigen Lichtquelle mit Strahlteilern aufgeteilt werden kann.

Der Reflektor kann dabei an dem Objekt, dessen Position zu bestimmen ist, angebracht sein. In diesem Fall entspricht die Position des Objekts dann der Position des Reflektors, und es werden gleichsam von dem Objekt, das heißt, von dem an dem Objekt angebrachten Reflektor, reflektierte Lichtstrahlen detektiert. In diesem Fall kann die mindestens eine Lichtquelle stationär sein, und durch die Detektion des reflektierten Lichtstrahls kann eine Entfernung des Reflektors von der mindestens einen stationären Lichtquelle bestimmt werden. Umfasst die mindestens eine Lichtquelle beispielsweise drei Lichtquellen, kann dann die Position durch Trilateration bestimmt werden.

Bei einer anderen Variante ist die mindestens eine Lichtquelle an dem Objekt angebracht bzw. mindestens ein Lichtstrahl wird ausgehend von dem Objekt abgestrahlt, und es werden ein oder mehrere stationäre Reflektoren verwendet. Auch in diesem Fall kann beispielsweise durch Messung mit drei verschiedenen stationären Reflektoren durch Trilateration die Position der mindestens einen Lichtquelle und somit die Position des Objekts, an welchem, die mindestens eine Lichtquelle angebracht ist, bestimmt werden.

Eine weitere Vorrichtung zur Vermessung einer Oberfläche (nicht durch die Ansprüche abgedeckt) kann eine Lichtquelle zum Beleuchten der Oberfläche, Detektormittel zum Detektieren von von der Oberfläche reflektiertem Licht sowie Auswertemittel zur Bestimmung von Oberflächenparametern in Abhängigkeit von dem mit dem mindestens einen Detektor delektierten Licht, sowie weiterhin Ausrichtemittel zum Ausrichten des mindestens einen Detektors in Richtung des reflektierten Lichts umfassen.

Durch die Ausrichtung der Detektormittel in Richtung des reflektierten Lichts kann eine Effizienz des Lichteinsammelns durch den Detektor verbessert werden.

Die Detektormittel können dabei insbesondere eine Sammeloptik zum Aufsammeln und Bündeln des reflektierten Lichts aufweisen. Durch die Ausrichteeinheit kann dabei sichergestellt werden, dass das von der Sammeloptik gebündelte Licht auf die Detektormittel fällt.

Zur Steuerung der Ausrichteeinrichtung können weitere Detektormittel zur Bestimmung der Richtung des reflektierten Lichts vorgesehen sein, welche beispielsweise parallel zu den Detektormitteln angeordnet sein können. Die weiteren Detektormittel können beispielsweise eine Quadrantendiode umfassen.

Gemäß einem weiteren Aspekt der Erfindung wird ein Verfahren zur Bestimmung der Position eines Objekts in einem Raumbereich bereitgestellt, umfassend: Lenken mindestens eines Lichtstrahls in einen Teil eines Raumbereichs, in welchem sich ein Reflektor befindet, Detektieren des von dem Reflektor reflektierten Lichtstrahls, und Bestimmen der Position des Objekts auf Basis des detektierten reflektierten Lichtstrahls, gekennzeichnet durch Bestimmen eines Maßes für die Amplitude des von dem Objekt reflektierten Lichtstrahls beim Detektieren, wobei das Lenken des mindestens einen Lichtstrahls in Abhängigkeit von dem ermittelten Maß für die Amplitude erfolgt.

Die Erfindung wird nachfolgend anhand von Ausführungsbeispielen unter Bezugnahme auf die beigefügte Zeichnung näher erläutert.

Fig. 1 ist eine schematische Darstellung einer Vorrichtung gemäß einem Ausführungsbeispiel.

Fig. 2 und Fig. 3 zeigen schematische Diagramme zur Erläuterung von Merkmalen von Ausführungsbeispielen der Erfindung.

Fig. 4 zeigt schematisch eine Beleuchtungseinrichtung gemäß einem Ausführungsbeispiel.

Fig. 5 zeigt schematisch eine Beleuchtungseinrichtung nach einem weiteren Ausführungsbeispiel..

Fig. 6 ist eine schematische Darstellung einer Vorrichtung gemäß einem Ausführungsbeispiel.

Fig. 7A und 7B zeigen schematisch eine Beleuchtungseinrichtung .

Fig. 8 zeigt ein Blockdiagramm einer Auswerteeinrichtung für die Beleuchtungseinrichtung aus Fig. 7A und 7B.

Fig. 9A und 9B zeigen eine Beleuchtungseinrichtung.

Fig. 10A bis 10C zeigen eine Beleuchtungseinrichtung.

Fig. 11A bis 11C zeigen eine Beleuchtungseinrichtung.

Fig. 12 ist eine schematische Darstellung einer Vorrichtung gemäß einem weiteren Ausführungsbeispiel.

Fig. 13 ist eine Darstellung einer Messvorrichtung, welche beispielsweise bei dem Ausführungsbeispiel der Fig. 12 verwendet werden kann.

Fig. 14 zeigt eine Beleuchtungseinrichtung gemäß einem weiteren Ausführungsbeispiel.

Fig. 15 zeigt eine Vorrichtung zur Oberflächenvermessung gemäß einem Ausführungsbeispiel der vorliegenden Erfindung.

Fig. 16 zeigt ein Schemadiagramm zur Veranschaulichung von Prinzipien mancher Ausführungsbeispiele der vorliegenden Erfindung.

Fig. 17 zeigt einen Richtungsdetektor gemäß einem Ausführungsbeispiel der vorliegenden Erfindung.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendung hin wie eine Positionsbestimmung in industriellen Einrichtungen oder eine Oberflächenvermessung in industriellen Einrichtungen beschrieben werden, ist die vorliegende Erfindung nicht auf diese Anwendung beschränkt.

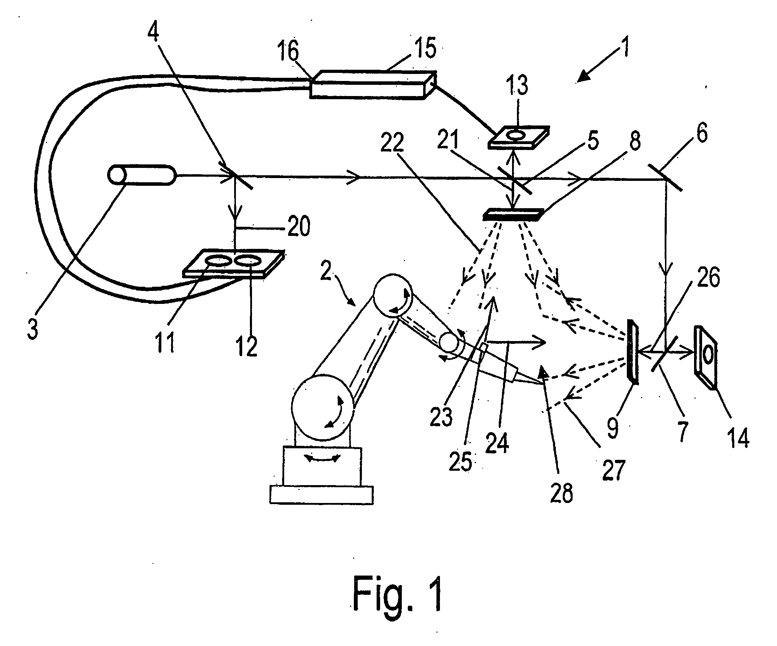

Fig. 1 ist eine schematische Darstellung einer Vorrichtung 1 zum Bestimmen einer Position eines Objekts nach einem Ausführungsbeispiel. Die Vorrichtung 1 ist im Kontext einer beispielhaften Anwendung dargestellt, bei der die Position einer Komponente eines Roboterarms 2, die mit einem Retroreflektor 25 versehen ist, ermittelt wird, kann aber ebenso in anderen Umgebungen und bei anderen Anwendungen eingesetzt werden.

Die Vorrichtung 1 umfasst eine Lichtquelle 3, die mit einer Repetitionsrate eine Folge kurzer Lichtpulse erzeugt, eine Lichtlenkeinrichtung, die durch eine Mehrzahl von optischen Elementen 4-9 ausgebildet ist, ein Paar von Referenzsignaldetektoren 11, 12 mit einem ersten Referenzsignaldetektor 11 und einem zweiten Referenzsignaldetektor 12, eine Detektoranordnung mit mehreren optischen Detektoren 13, 14 und eine Auswerteschaltung 15. Die Lichtlenkeinrichtung empfängt die Folge von Lichtpulsen und lenkt die Folge von Lichtpulsen zu dem Paar von Referenzsignaldetektoren 11, 12 und in einen allgemein mit 28 bezeichneten Raumbereich, in dem die Position des an dem Roboterarm 2 angebrachten Retroreflektors 25 bestimmt werden soll. Aus Gründen der Einfachheit wird nachfolgend das von der Lichtlenkeinrichtung zu den Referenzsignaldetektoren 11, 12 und in den Raumbereich 28 gelenkte Licht ebenfalls als die Folge von Lichtpulsen bezeichnet, wobei ersichtlich ist, dass jeweils nur ein Anteil der von der Lichtquelle 2 erzeugten Lichtpulsintensität zu den Referenzsignaldetektoren 11, 12 bzw. in den Raumbereich 28 gelenkt wird. Die Folge von Lichtpulsen wird in dem Raumbereich von dem an dem Roboterarm 2 angeordneten Retroreflektor 25 reflektiert. Die reflektierte Folge von Lichtpulsen wird von den Detektoren 13, 14 erfasst. Die Auswerteschaltung 15 ermittelt aus den Signalen von den Referenzsignaldetektoren 11, 12, die an einem Referenzsignaleingang 16 empfangen werden, und aus den Signalen von den Detektoren 13, 14 eine Phasenlage von Signalkomponenten der an den Detektoren 13, 14 erfassten Lichtsignale, die in einer Beziehung zur Laufzeit der Lichtpulse in dem Raumbereich 28 und somit zum Abstand des Retroreflektors 25 von verschiedenen Elementen der Lichtlenkeinrichtung steht. Auf diese Weise kann die Position des Retroreflektors 25 ermittelt werden. Wie noch ausführlicher erörtert wird, beruht die Ermittlung der Phasenlage durch die Auswerteschaltung 15 auf Signalkomponenten der an den Detektoren 13, 14 erfassten Lichtsignale, die eine Frequenz aufweisen, die ein Vielfaches der Repetitionsrate ist.

Die Detektoren 13, 14 und Referenzsignaldetektoren 11, 12 sind beispielsweise als Fotodetektoren ausgestaltet und erfassen die einfallende Lichtintensität.

Während in Fig. 1 aus Gründen der Übersichtlichkeit nur zwei Strahlteiler 5, 7, von denen aus Licht in den Raumbereich 28 gelenkt wird, und zwei diesen zugeordnete Detektoren 13, 14 dargestellt sind, kann Licht auch von mehr als zwei unterschiedlichen Positionen aus in den Raumbereich gelenkt werden, in dem die Position des Objekts bestimmt werden soll. Sollen alle drei räumlichen Koordinaten des Retroreflektors 25 bestimmt werden, kann die Folge von Lichtpulsen von wenigstens einer weiteren Einstrahlposition aus in den Raumbereich 28 gelenkt werden, die nicht auf einer Geraden angeordnet ist, die durch die Strahldurchtrittspunkte an den Strahlteilern 5 und 7 definiert ist.

Die Funktionsweise der verschiedenen Komponenten der Vorrichtung 1 wird nachfolgend näher erläutert.

Die Lichtquelle 3 erzeugt ein optisches Signal, das mit einer periodischen Funktion moduliert ist und das eine Grundfrequenz $f_0$ sowie ausgeprägte Anteile von Oberwellen der Grundfrequenz $f_0$, d.h. ausgeprägte Frequenzkomponenten mit Frequenzen aufweist, die Vielfache von $f_0$ sind. Ein solches Signal wird beispielsweise durch einen Kurzpulslaser erzeugt, der eine Folge von Lichtpulsen in einem wohldefinierten zeitlichen Abstand $T_0 = 1/f_0$, d.h. mit einer Repetitionsrate $f_0$, erzeugt, wobei die Dauer jedes Pulses kurz ist im Vergleich zum zeitlichen Abstand $T_0$ zwischen aufeinanderfolgenden Pulsen.

Die Dauer jedes Lichtpulses kann im Vergleich zu dem Zeitabstand $T_0$ zwischen aufeinanderfolgenden Lichtpulsen sehr klein sein, beispielsweise von der Größenordnung $1 \cdot 10^{-5}$. Bei der Vorrichtung 3 können die Repetitionsrate $f_0$ und die Zeitdauer jedes Pulses geeignet in Abhängigkeit von einer gewünschten Messgenauigkeit bei der Ortsbestimmung, einer anfänglichen Unsicherheit über die Position des Objekts, und der Signalkomponente des an den Detektoren 13, 14 detektierten Lichtsignals, für die eine Phasenlage bestimmt werden soll, oder in Abhängigkeit von weiteren Faktoren gewählt werden. Soll zur Bestimmung der Phasendifferenz die n-te Oberwelle von $f_0$ verwendet werden, werden die Dauer jedes Lichtpulses und der Zeitabstand $T_0$ zwischen aufeinanderfolgenden Lichtpulsen so gewählt, dass die von der Lichtquelle 3 ausgegebene Folge von Lichtsignalen noch ein ausreichendes spektrales Gewicht bei der Frequenz $n \cdot f_0$ aufweist. Als Pulsform kann eine Folge von Rechteckspulsen gewählt werden, können ebenso andere geeignete Pulsformen gewählt werden, beispielsweise das Quadrat eines hyperbolischen Secans oder eine Gaussfunktion

Eine geeignete Folge von Lichtpulsen kann von verschiedenen Lasern erzeugt werden, die für die Erzeugung kurzer Lichtpulse eingerichtet sind. Insbesondere können optische Frequenzsynthesizer verwendet werden. Beispielsweise kann ein elektrisch gepumpter Diodenlaser, z.B. ein gütegeschalteter Laser, ein verstärkungsgeschalteter (gain switched) Laser, ein aktiv oder passiv modengekoppelter Laser oder ein Laser mit hybrider Modenkopplung, oder ein modengekoppelter oberflächenemittierender Laser mit vertikalem Resonator (Vertical-Cavity Surface Emitting Laser, VCSEL) als Lichtquelle 3 verwendet werden. Es kann auch ein optisch gepumpter Laser, beispielsweise ein passiv modengekoppelter oberflächenemittierender Laser mit externem vertikalen Resonator (Vertical External Cavity Surface Emitting Lasers, VECSEL) oder ein auf photonische-Kristallfasern basierender Laser (photonic-crystal-fiber laser) als Lichtquelle 3 verwendet werden. Beispielhafte Pulsdauern der Lichtquelle 3 liegen in einem Bereich von 100 fs und 100 ps. Beispielhafte Repetitionsraten liegen in einem Bereich von 50 MHz bis 50 GHz. Beispielhafte mittlere Leistungen liegen in einem Bereich von 1 mW bis 10 W. Beispielhafte Werte für den Pulsjitter liegen zwischen 10 fs und 1 ps Effektivwert (quadratischer Mittelwert).

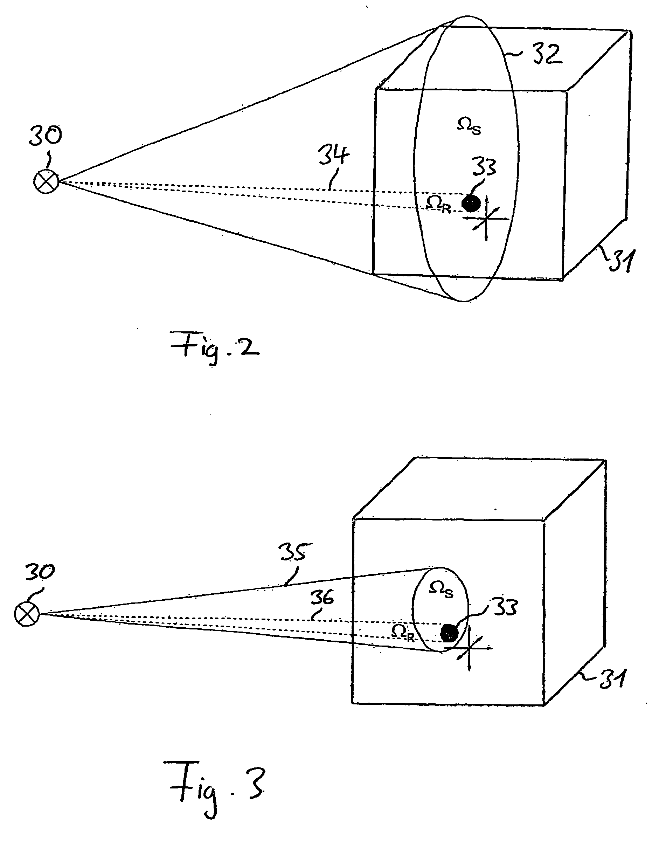

Wie in Fig. 1 dargestellt, wird die von der Lichtquelle 3 ausgegebene Folge von Lichtpulsen von der Lichtlenkeinrichtung zu den Referenzsignaldetektoren 19, 12 und in den Raumbereich 28 gelenkt. Die Lichtlenkeinrichtung umfasst bei der Vorrichtung 1 mehrere Strahlteiler 4, 5 und 7, einen Spiegel 6 und Strahlaufweiter 8, 9, die den Strahlteilern 5 bzw. 7 zugeordnet sind. Der Strahlteiler 4 empfängt die Folge von Lichtpulsen von der Lichtquelle 3. Ein Teilstrahl 20 der Folge von Lichtpulsen wird von dem Strahlteiler 4 als Referenzsignal zu den Referenzsignaldetektoren 11, 12 gelenkt. Falls erforderlich, kann auch dem Strahlteiler 4 ein optisches Element zur Strahlaufteilung, insbesondere ein Strahlteiler, nachgeordnet sein um sicherzustellen, dass der Teilstrahl 20 sowohl auf den Referenzsignaldetektor 11 als auch auf den Referenzsignaldetektor 12 trifft. Ein weiterer Teilstrahl der Folge von Lichtpulsen wird von dem Strahlteiler 4 transmittiert und trifft auf den Strahlteiler 5. Der Strahlteiler 5 lenkt einen Teilstrahl 21 der Folge von Lichtpulsen über den Strahlaufweiter 8 in den Raumbereich 28, wobei der Strahlaufweiter 8 den Teilstrahl 21 zu einem Lichtkegel 22 aufweitet. Ein weiterer Teilstrahl wird von dem Strahlteiler 5 transmittiert und über den Spiegel 6 auf den Strahlteiler 7 gelenkt. Der Strahlteiler 7 lenkt einen Teilstrahl 26 der Folge von Lichtpulsen über den Strahlaufweiter 9 in den Raumbereich 28, wobei der Strahlaufweiter 9 den Teilstrahl 26 zu einem Lichtkegel 27 aufweitet. Bei dem dargestellten Ausführungsbeispiel ist die Aufweitung des Strahlaufweiters 8 und die Aufweitung des Strahlaufweiters 9 derart gewählt, dass der Lichtkegel 22 bzw. der Lichtkegel 27 nur einen Teil des Raumbereichs 28 beleuchten, in welchem eine Positionsbestimmung ermöglicht werden soll. Wie später unter Bezugnahme auf die Fig. 2-9 näher erläutert werden wird, sind Nachführeinrichtungen vorgesehen, welche beispielsweise in dem Ausführungsbeispiel der Fig. 1 die Lichtkegel 22 und 27 auf denjenigen Teil des Raumbereichs 28 lenken, in welchem sich der Retroreflektor 25 des Roboterarms 2 befindet.

Ein von dem Strahlteiler 7 transmittierter Anteil des von dem Spiegel 6 empfangenen Lichtstrahls kann über einen in Fig. 1 nicht dargestellten weiteren Strahlteiler in Richtung des Raumbereichs 28 gelenkt werden. Der Teil des Raumbereichs 28, in dem bei einer bestimmten Stellung der oben erwähnten Nachführeinrichtungen die Position des Objekts bestimmt werden kann, entspricht dem Überlappungsbereich der verschiedenen Lichtkegel 22, 27. Falls die Folge von Lichtpulsen von mehr als drei Positionen aus in Richtung des Raumbereichs gelenkt wird, in dem die Objektposition bestimmt werden soll, ist der Raumbereich, in dem eine Bestimmung der Objektposition möglich ist, die Vereinigung aller Überlappungsbereiche von wenigstens drei verschiedenen Lichtkegeln, die ausgehend von wenigstens drei Ausgangspunkten eingestrahlt werden, die nicht auf einer Geraden liegen.

Die über den Strahlteiler 5 und den Lichtaufweiter 8 in dem Lichtkegel 22 in den Raumbereich 28 gelenkte Folge von Lichtpulsen trifft auf den Retroreflektor 25 und wird von diesem zurück in Richtung des Lichtaufweiters 8 reflektiert. Das von dem Retroreflektor 25 zurück in Richtung des Lichtaufweiters 8 reflektierte Licht bildet ein erstes Lichtsignal 23, das über den Lichtaufweiter 8 und den Strahlteiler 5 auf den Detektor 13 gelenkt wird. Die über den Strahlteiler 7 und den Lichtaufweiter 9 in dem Lichtkegel 26 in den Raumbereich 28 gelenkte Folge von Lichtpulsen trifft auf den Retroreflektor 25 und wird von diesem zurück in Richtung des Lichtaufweiters 9 reflektiert. Das von dem Retroreflektor 25 zurück in Richtung des Lichtaufweiters 9 reflektierte Licht bildet ein zweites Lichtsignal 24, das über den Lichtaufweiter 9 und den Strahlteiler 7 auf den Detektor 14 gelenkt wird. Wenn der Retroreflektor 25 im Lichtkegel weiterer Kombinationen von Strahlteiler, Lichtaufweiter und Detektor angeordnet ist, werden von dem Retroreflektor 25 aus entsprechend weitere Lichtsignale reflektiert, die über den Lichtaufweiter und Strahlteiler auf den entsprechenden Detektor gelenkt werden.

Die die Folge von Lichtpulsen in den Raumbereich 28 lenkende Lichtlenkeinrichtung und die Detektoren 13, 14 der Detektoranordnung sind so angeordnet, dass das in Richtung des Detektors 13 reflektierte Lichtsignal 23 in eine andere Richtung reflektiert wird als das in Richtung des Detektors 14 reflektierte Lichtsignal 24.

Der an dem Roboterarm 2 vorgesehene Retroreflektor 25 kann beispielsweise als Eckwürfelreflektor (Corner Cube Reflector, CCR), als Tripelprisma oder als Katzenaugenreflektor (Cat-Eye) bzw. als Kugellinse (Ball Lens) ausgestaltet sein. Beim Eckwürfelreflektor und dem Tripelprisma wird das Licht parallel zu den einfallenden Strahlrichtungen zurückreflektiert. Ein divergentes Strahlenbündel bleibt divergent. Beim Katzenaugenreflektor bzw. bei der Kugellinse können diese Retroreflektoren für eine bestimmte Distanz so optimiert werden, dass das reflektierte Strahlenbündel im Wesentlichen in sich selbst zurückreflektiert wird, wodurch am Detektor ein höherer Signalpegel vorliegt.

Anstelle eines Retroreflektors kann auch ein kleines streuendes Element verwendet werden, das sich in seinem Streuverhalten deutlich von seiner Umgebung unterscheidet, um Licht von dem relevanten Objektpunkt zu den Detektoren hin zu streuen. Damit am Detektor ein nutzbares Signal vorliegt, das vom Rauschen der streuenden Umgebung unterscheidbar ist, sollte das kleine Element Licht stark streuen.

Die Lichtsignale 23 und 24 werden von den Detektoren 13 bzw. 14 erfasst. Die Detektoren 13, 14 und Referenzsignaldetektoren 11, 12 sind als Photoempfänger ausgestaltet. Die Detektoren 13 und 14 erfassen dabei die Lichtleistung der auf sie einfallenden Folge von Lichtpulsen, die über den dem Detektor 13 bzw. 14 jeweils zugeordneten Strahlteiler 5 bzw. 7 zu dem Retroreflektor 25 und von diesem zurück zu dem Detektor 13 bzw. 14 propagiert. Die unterschiedliche optische Weglänge eines Lichtpulses, um einerseits zu einem der Referenzsignaldetektoren 11, 12 und andererseits nach einer Reflexion an dem Retroreflektor 25 zu einem der Detektoren 13 bzw. 14 zu gelangen, führt zu einer Zeitverschiebung $\tau_1$ bzw. $\tau_2$ zwischen der Ankunft ein- und desselben Lichtpulses an einem der Detektoren 13 bzw. 14 und an den Referenzsignaldetektoren 11, 12, die gleich dem Unterschied in optischer Weglänge der Lichtpfade geteilt durch die Lichtgeschwindigkeit c ist. Da typischerweise nur ein geringer Anteil des in den Raumbereich 28 gelenkten Lichts von dem Retroreflektor 25 reflektiert wird, ist das Signal an den Detektoren 13, 14 gegenüber dem Referenzsignal an den Referenzsignaldetektoren 11, 12 abgeschwächt.

Die Weglängendifferenz beinhaltet einerseits Strecken, die von der Geometrie der Vorrichtung, insbesondere den Abständen zwischen den Strahlteilern 5, 7 und dem Strahlteiler 4 sowie den Abständen zwischen den Strahlteilern 4, 5, 7 und den Detektoren 13, 14 bzw. den Referenzsignaldetektoren 11, 12, jeweils entlang des Strahlengangs, abhängen, und andererseits eine Komponente, die für das an dem Detektor 13 erfasste Lichtsignal von der optischen Weglänge zwischen dem Strahlteiler 5 oder dem virtuellen Ausgangspunkt des Lichtkegels 22, und dem Retroreflektor 25 und für das an dem Detektor 14 erfasste Signal von der optischen Weglänge zwischen dem Strahlteiler 7 oder dem virtuellen Ausgangspunkt des Lichtkegels 27, und dem Retroreflektor 25 abhängt. Da bei bekannter Geometrie der Vorrichtung 1 der von der Vorrichtungsgeometrie abhängige Anteil der Weglängendifferenz bekannt ist, kann durch Messung der Zeitverschiebung $\tau_1$ zwischen dem Lichtsignal 23 am Detektor 13 und dem Referenzsignal 20 an den Referenzsignaldetektoren 11, 12 die von dem Lichtpuls zurückgelegte optischen Weglänge zwischen dem Strahlteiler 5 und dem Retroreflektor 25 und somit der Abstand des Retroreflektors 25 von dem Strahldurchtrittspunkt des Strahlteilers 5 bzw. von dem virtuellen Ausgangspunkt des Lichtkegels 22 bestimmt werden. Ähnlich kann durch Messung der Zeitverschiebung $\tau_2$ zwischen dem Lichtsignal 24 am Detektor 14 und dem Referenzsignal 20 an den Referenzsignaldetektoren 11, 12 die von dem Lichtpuls zurückgelegte optischen Weglänge zwischen dem Strahlteiler 7 und dem Retroreflektor 25 und somit der Abstand des Retroreflektors 25 von dem Strahldurchtrittspunkt des Strahlteilers 7 bzw. von dem virtuellen Ausgangspunkt des Lichtkegels 27 bestimmt werden.

Die Detektoren 13 und 14 sowie die Referenzsignaldetektoren 11, 12 sind mit der Auswerteschaltung 15 gekoppelt, die eine Phasendifferenz zwischen den Lichtsignalen 23, 24 und dem Referenzsignal 20 ermittelt. Die Auswerteschaltung 15 der Vorrichtung 1 ermittelt dann die Phasendifferenz zwischen dem Lichtsignal 23, 24 und dem Referenzsignal 20 für eine Signalkomponente, deren Frequenz im Wesentlichen ein Vielfaches der Repetitionsrate ist.

Auf Basis der ermittelten Phasendifferenzen, welche von den oben erwähnten Zeitverschiebungen abhängen, kann dann die Position des Retroreflektors 25 bestimmt werden.

Es ist zu bemerken, dass die in Fig. 1 dargestellte Vorrichtung lediglich als Beispiel dient, und die nachfolgend erläuterten Nachführeinrichtungen generell in Fällen verwendet werden können, in welchen eine Position eines Objekts in zwei oder drei Raumrichtungen basierend auf von dem Objekt reflektierten Lichtstrahlen bestimmt werden soll.

Nunmehr werden unter Bezugnahme auf die Fig. 2-9 Prinzipien der oben erwähnten Nachführeinrichtungen zum Lenken eines insbesondere aufgeweiteten Lichtstrahls in einen Teil eines interessierenden Raumbereichs, in welchem sich ein Retroreflektor, dessen Position zu bestimmen ist, befindet, erläutert. In den Fig. 2-9 werden gleiche Bezugszeichen verwendet, um gleiche oder ähnliche Elemente zu bezeichnen. Fig. 2 und 3 zeigen dabei Schemabilder, welche den Hintergrund für die Verwendung eines weniger aufgeweiteten Lichtstrahls erläutern.

In den Fig. 2 und 3 ist ein Retroreflektor 33 schematisch als Kugel dargestellt, dessen Position innerhalb eines interessierenden Raumbereichs 31, welcher vereinfacht als Würfel dargestellt ist, bestimmt werden soll.

Bei dem Beispiel von Fig. 2 erzeugt eine Lichtquelle 30 einen Lichtkegel 32, welcher derart aufgeweitet ist, dass er im Wesentlichen den gesamten Raumbereich 31 erfasst. Ein Raumwinkel entsprechend dem Lichtkegel 32 ist in Fig. 2 mit $\Omega_S$ bezeichnet.

Dementsprechend trifft nur ein relativ kleiner Teil des Lichtkegels 32 auf den Retroreflektor 33. Dieser Teil des Lichtkegels 32 ist in Fig. 2 mit dem Bezugszeichen 34 gekennzeichnet und entspricht einem Raumwinkel $\Omega_R$. Nur dieser Teil, welcher vom Retroreflektor 33 erfasst und reflektiert wird, kann zur Detektion genutzt werden.

Da $\Omega_R/\Omega_S$ im Fall von Fig. 2 relativ klein ist, wird also nur ein geringer Teil der Ausgangsleistung der Lichtquelle 30 tatsächlich genutzt. Dies kann zu einem relativ ungünstigen Signal-Rausch-Verhältnis führen und/oder leistungsstarke und somit relativ teure Lichtquellen 30 erfordern.

Ein Wert für $\Omega_R/\Omega_S$ für einen derartigen Fall kann beispielsweise aus dem Verhältnis der Querschnittsfläche des Retroreflektors 33 und der Querschnittsfläche des Raumbereichs 31 näherungsweise bestimmt werden. Ein typischer Wert ist beispielsweise $1\text{cm}^2$ für die Querschnittsfläche des Retroreflektors 33 und einen Wert von $1\text{m}^2$ für die Querschnittsfläche des Raumvolumens 31, d.h. des Messvolumens, was zu einem Verhältnis von $1\cdot10^{-4}$ führt.

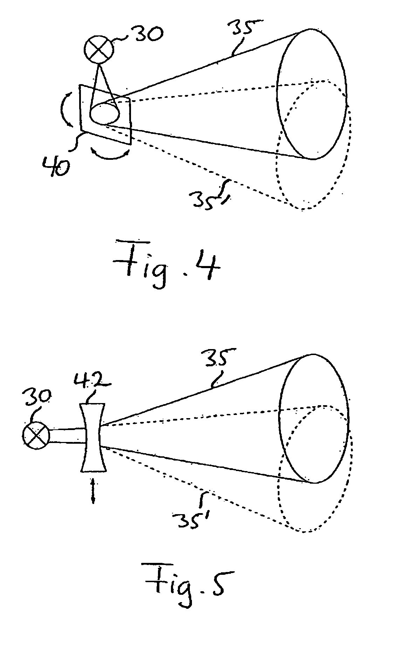

In Fig. 3 wird im Vergleich hierzu ein Lichtkegel 35 verwendet, mit dem nur ein Teil des Raumbereichs 31 ausgeleuchtet wird. Ein Teil 36 des Lichtkegels 35 beleuchtet wiederum den Retroreflektor 33. Im Fall von Fig. 3 ist, wie unschwer zu erkennen, das Verhältnis $\Omega_R/\Omega_S$ größer als im Fall von Fig. 2 oder, in anderen Worten, im Fall von Fig. 3 wird ein größerer Teil der Lichtintensität der Lichtquelle 30 für die tatsächliche Messung benutzt. Allerdings ist es in diesem Fall erforderlich, dass der Lichtkegel 35 einer Bewegung des Retroreflektors 33 folgt, so dass eine Messung im gesamten Raumbereich 31 erfolgen kann. Zur Nachführung können beispielsweise ein Spiegel oder auch andere optische Elemente dienen. Beispiele hierfür werden unter Bezugnahme auf Fig. 4 und 5 erläutert. Zu bemerken ist, dass, auch wenn in der oben stehenden Erläuterung und in den nachfolgenden Ausführungsbeispielen ein kegelförmig aufgeweiteter Lichtstrahl, d.h. ein divergenter Lichtstrahl, als Beispiel verwendet wird, die Erfindung nicht auf derartige Lichtstrahlen beschränkt ist. Bei anderen Ausführungsbeispielen können auch anders geformte Lichtstrahlen, beispielsweise kollimierte Lichtstrahlen, d.h. parallele Lichtstrahlen mit einem durch eine entsprechende Optik bestimmten Strahldurchmesser, oder konvergente, d.h. fokussierte Lichtstrahlen verwendet werden.

Bei dem Ausführungsbeispiel der Fig. 4 wird ein kipp-/schwenkbarer Spiegel 40 verwendet, um die Richtung des Lichtkegels 35, welcher von der Lichtquelle 30 ausgesendet wird, zu verändern, beispielsweise zu dem gestrichelt dargestellten Lichtkegel 35'.

Bei dem Ausführungsbeispiel von Fig. 5 wird statt des Spiegels 40 zur Einstellung der Richtung des Lichtkegels 35 ein lateral dezentrierbares abbildendes Element, in diesem Beispiel eine Linse 42, verwendet. Durch Verschieben der Linse 42 senkrecht zur Strahlrichtung wie durch einen Pfeil angedeutet kann ebenso die Richtung des Lichtkegels 35 verändert werden. Zu bemerken ist, dass ein derartiges System nicht auf ein einziges verschiebbares abbildendes Element begrenzt ist, sondern auch mehrere verschiebbare abbildende Elemente wie Linsen vorgesehen sein können. Auch ist statt einer Verschiebung senkrecht zur Strahlrichtung ein Kippen oder andere Bewegung derartiger abbildender Elemente denkbar. Auch eine Kombination eines lateral dezentrierbaren abbildenden Elements mit einem kipp-/schwenkbaren Spiegel ist möglich.

Bei derartigen Systemen, in welchen ein Lichtkegel einer oder mehrerer Lichtquellen nur einen Teil eines Raumbereichs, innerhalb welchem eine Positionsbestimmung erfolgen soll, erfassen, ist es nötig, eine Information über die Position eines Retroreflektors oder eines anderen zu beleuchtenden Objekts zu erhalten, um den Lichtkegel entsprechend ausrichten zu können. Bei einem Ausführungsbeispiel wie demjenigen von Fig. 1 kann diese Bestimmung beispielsweise durch Messgeber in den Achsen des Roboters 2 erfolgen, durch welche eine Positionsbestimmung des Retroreflektors 25 möglich ist. Diese Positionsbestimmung ist generell ungenauer als die Positionsbestimmung, welche letztendlich durch die optische Messung erfolgt, reicht aber im Allgemeinen aus, um den Lichtkegel entsprechend auszurichten. Die Aufweitung des Lichtkegels kann dann entsprechend der Messgenauigkeit der Messgeber in dem Roboter gewählt werden. Falls keine derartigen Messgeber vorhanden sind, können auch Daten eines Steuerprogramms für die Steuerung der Bewegung des Roboters verwendet werden.

Schließlich können, wenn einmal - beispielsweise durch Abrastern des Raumvolumens mit dem oder den Lichtkegeln - die Position mittels der optischen Messung bestimmt wurde, auch die Position der optischen Messung selbst zur Nachführung verwendet werden. Ergibt die optische Messung, dass sich der Retroreflektor zum Rand des entsprechenden Lichtkegels hinbewegt, wird der Lichtkegel entsprechend nachgeführt. Auch hierzu kann die Größe des Lichtkegels, d.h. die Aufweitung, geeignet gewählt werden, um eine sichere Nachführung zu gewährleisten, d.h. einen gewissen Abstand von Zentrum des Lichtkegels zum Rand des Lichtkegels, um die Bewegung innerhalb des Lichtkegels rechtzeitig erfassen zu können.

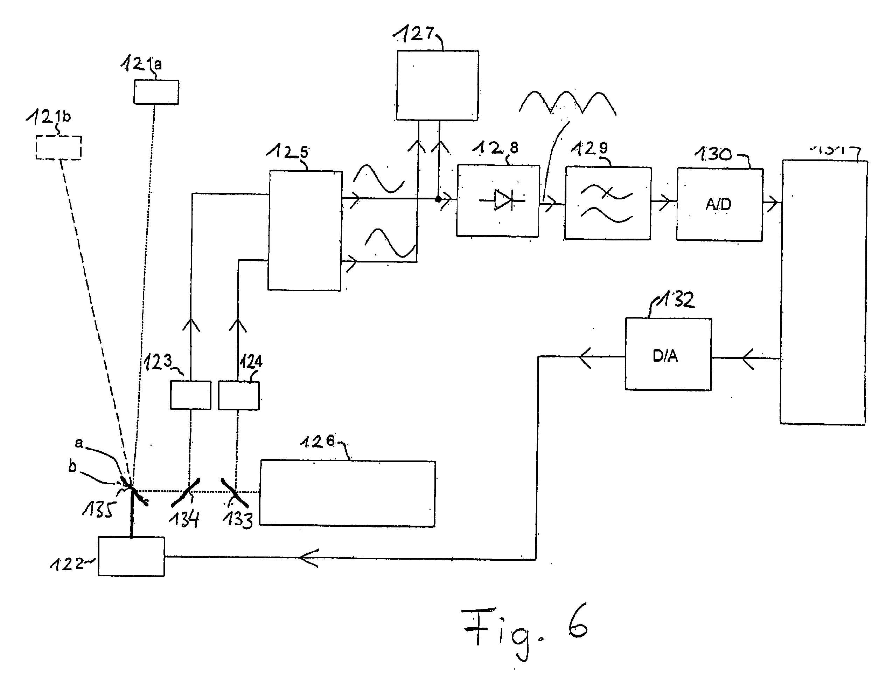

Eine weitere Möglichkeit besteht darin, neben der Phase des reflektierten Lichtes zur Positionsbestimmung wie oben beschrieben zudem die Amplitude des reflektierten Lichtes auszuwerten und die Nachführung derart vorzunehmen, dass die Amplitude maximiert wird bzw. dass die Amplitude einen vorgegebenen Mindestwert erreicht. Ein Ausführungsbeispiel einer entsprechenden Vorrichtung ist in Fig. 6 dargestellt.

Das Ausführungsbeispiel der Fig. 6 kann als Erweiterung des Ausführungsbeispiels von Fig. 1 implementiert werden, kann jedoch auch unabhängig hiervon implementiert werden.

Bei dem Ausführungsbeispiel von Fig. 6 erzeugt eine Lichtquelle 126, beispielsweise ein Kurzpulslaser wie bereits oben beschrieben, einen Lichtstrahl. Durch einen Strahlteiler 133 wird ein Teil des Lichtstrahls auf einen Referenzdetektor 124 gelenkt, dessen Funktion der Funktion der Referenzdetektoren 11, 12 der Fig. 1 entspricht. Ein übriger Teil des Lichtstrahls wird auf einen Spiegel 135 gelenkt, welcher mittels eines Spiegelantriebs 122 beweglich ist, um den Lichtstrahl auf einen Retroreflektor 121 zu lenken. Während in Fig. 6 nur ein einziger Spiegel dargestellt ist, können bei Ausführungsbeispielen zur dreidimensionalen Positionsbestimmung auch entsprechend drei Spiegel und entsprechend mehr Strahlteiler vorhanden sein, oder zur zweidimensionalen Positionsbestimmung zwei Spiegel und zwei Strahlteiler, um drei bzw. zwei Lichtstrahlen auf den Retroreflektor 121 zu lenken, wie dies bereits unter Bezugnahme auf Fig. 1 erläutert worden ist. Bei anderen Ausführungsbeispielen können zusätzliche Lichtquellen zur Erzeugung zusätzlicher Lichtstrahlen vorgesehen sein.

Als Beispiel sind in Fig. 6 zwei Positionen a und b des Spiegels 135 dargestellt, entsprechend Positionen 121 a und 121b des Retroreflektors. Zu bemerken ist, dass der Lichtstrahl vor oder nach dem Spiegel 135 durch eine (nicht dargestellte) Optik aufgeweitet werden kann, wie dies ebenfalls bereits erläutert worden ist.

Von dem Retroreflektor 121 reflektiertes Licht wird über den Spiegel 135 und einen Strahlteiler 134 zu einem Detektor 123 gelenkt. Ein Messverstärker und Mischer 125 verarbeitet die Signale der Detektoren 123 und 124 und leitet die jeweils verarbeiteten Signale zu einem Phasenmesser 127 weiter, welcher eine Phasendifferenz der Signale mischt, woraus wie bereits erläutert auf die Position des Retroreflektors 121 geschlossen werden kann. Der Mischer des Messverstärkers/Mischers 125 dient bei dem dargestellten Ausführungsbeispiel insbesondere dazu, das von dem Detektor 123 ausgegebene Signal, welches eine Frequenz aufweist, welche bei einem Kurzpulslaser der Frequenz des Kurzpulslasers entspricht, auf eine Zwischenfrequenz herunterzumischen.

Zudem wird das durch den Messverstärker und Mischer 5 verarbeitete Signal des Detektors 123 von einem Gleichrichter 128 gleichgerichtet und von einem Tiefpassfilter 129 geglättet. Das so erzeugte Signal wird von einem Analog-Digital-Wandler 130 in ein digitales Signal umgesetzt, dessen Größe ein Maß für die Amplitude des von dem Detektor 123 detektierten Signals ist. Dieses Digitalsystem wird eine Auswerteeinheit 131, beispielsweise einem Mikroprozessor oder einem Rechner, übergeben. Die Auswerteeinheit 131 kann dabei die gleiche Auswerteeinheit sein, welche auch die von dem Phasenmesser 127 detektierte Phasendifferenz bestimmt oder auswertet.

In Abhängigkeit von der so erfassten Signalamplitude an dem Detektor 123 steuert die Auswerteeinheit 131 dann über einen Digital-Analog-Wandler 132 den Spiegelantrieb 122 an.

Dabei wird beispielsweise zunächst, beispielsweise beim Starten der Vorrichtung, in einem Betriebsmodus der Spiegel 135 kontinuierlich über seinen gesamten Winkelbereich durchgefahren, beispielsweise zunächst in einer Achse, dabei das Messsignal detektiert und in einer Tabelle zusammen mit der jeweiligen Position, z.B. Winkelposition, des Spiegels 135 abgelegt. Nach diesem "Suchdurchlauf" wird die Position, d.h. der Winkel, des Spiegels 135 so eingestellt, dass er die Position einnimmt, bei der das Maximum der Amplitude erkannt wurde. Bei anderen Ausführungsbeispielen ist die anfängliche Position des Retroreflektors bekannt, und der "Suchdurchlauf" entfällt.

Während des Betriebs wird dann in einem zweiten Betriebsmodus durch kontinuierliches oder intervallartiges Überwachen des von dem Analog-Digital-Wandler 130 ausgegebenen Signals die Position des Spiegels 135 derart nachgeführt, dass das Messsignal, d.h. die Amplitude des an dem Detektor 123 empfangenen Signals, maximiert wird und/oder einen vorgegebenen Schwellenwert erreicht.

Während bei dem Ausführungsbeispiel von Fig. 6 ein Signal nach dem Messverstärker/Mischer 125 ausgewertet wird, kann bei anderen Ausführungsbeispielen auch direkt das von dem Detektor 123 ausgegebene Signal ausgewertet werden und dessen Amplitude bestimmt werden.

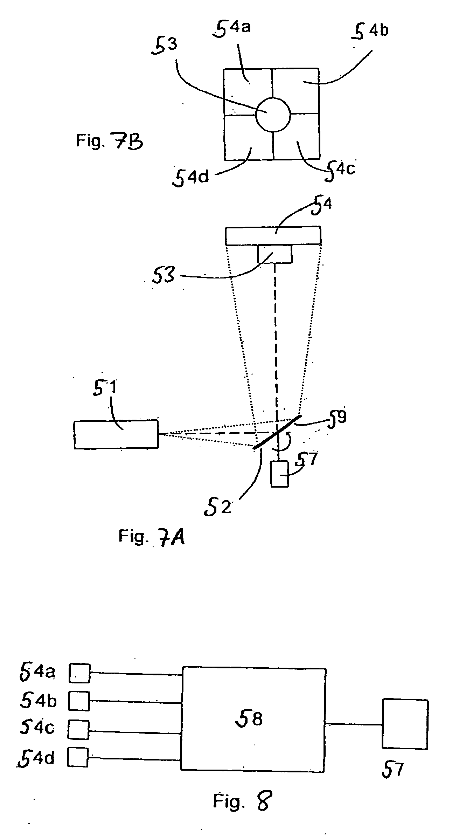

Bei anderen Beispielen (nicht durch die Ansprüche abgedeckt) werden zusätzliche Detektoren verwendet, um eine Bewegung des Retroreflektors zu erfassen und den Lichtkegel entsprechen nachzuführen. Beispiele hierfür werden nunmehr unter Bezugnahme auf Fig. 7-9 erläutert.

In Fig. 7 und 8 ist dabei eine Nachführeinrichtung mit Detektoranordnung dargestellt. Fig. 7A zeigt eine Ansicht der Nachführeinrichtung, Fig. 7B zeigt eine Teilansicht einer verwendeten Retroreflektor/Detektoranordnung und Fig. 8 ein Blockschaltbild einer entsprechenden Auswerte/Steuereinrichtung. In Fig. 7A wird Licht, beispielsweise Laserlicht eines Kurzpulslasers, von einer Lichtquelle 51 erzeugt und über einen Spiegel 59 zu einem Retroreflektor 53 hingelenkt, wie bereits oben beschrieben. Die Lichtquelle 51 kann dabei sowohl die eigentliche Lichtquelle, z.B. einen Laser, als auch eine Optik zur kegelförmigen Aufweitung des erzeugten Lichtstrahls oder andere optische Elemente wie z.B. in Fig. 1 dargestellt umfassen.

Der Spiegel 59 kann dabei durch einen Spiegelantrieb 57 bewegt werden, um die Richtung des von der Lichtquelle 51 erzeugten Lichtkegels zu ändern und insbesondere den Lichtkegel auf den Retroreflektor 53 zu lenken. Bei dem Retroreflektor 53 ist zudem eine Detektoranordnung 54 vorgesehen, welche bei dem dargestellten Ausführungsbeispiel die Form einer Quadrantendiode bzw. eines Quadrantendetektors aufweist. Diese Anordnung ist in Fig. 7B detaillierter gezeigt. Mittig ist der Retroreflektor 53 angeordnet, um ihn herum vier Quadranten 54a-54d des Quadrantendetektors 54, z.B. vier im Wesentlichen unabhängige Fotodioden.

Durch die vier Quadranten 54a-54d des Quadrantendetektors kann eine Relativbewegung des Lichtkegels zu dem Retroreflektor 53 erfasst werden, bevor der Retroreflektor 53 den Lichtkegel verlässt, und der Lichtkegel entsprechend nachgeführt werden. Eine derartige Relativbewegung kann beispielsweise durch eine Bewegung des Retroreflektors 53, welcher an einem Roboterarm wie in Fig. 1 dargestellt angebracht sein kann, hervorgerufen werden.

Beispielsweise deutet eine Abschwächung des von dem Quadranten 54a detektierten Lichtes bei gleichzeitig konstantem Lichteinfall auf den Quadranten 54c darauf hin, dass sich der Lichtkegel relativ zu dem Retroreflektor 53 zu dem Quadranten 54c hinbewegt, hin, so dass der Lichtkegel entsprechend nachgeführt werden kann.

Eine entsprechende Steuereinrichtung ist in Fig. 8 schematisch dargestellt. Hier empfängt eine Steuereinrichtung 58, welche beispielsweise in Form eines programmierbaren Logikchips oder auch als fest verdrahtete Hardware ausgeführt sein kann, Signale der Quadranten 54a-54d und ermittelt durch Verknüpfung dieser Signale wie oben beispielhaft erläutert eine Bewegungsrichtung des Lichtkegels relativ zu dem Retroreflektor 53. Basierend auf der ermittelten Bewegungsrichtung wird dann der Spiegelantrieb 57 angesteuert, um den Spiegel 59 zur Nachführung des Lichtkegels zu bewegen, um sicherzustellen, dass der Retroreflektor 53 stets vom Lichtkegel erfasst wird.

In Fig. 7 und 8 kann statt einer Quadrantendiode auch eine andere Mehrfachdetektoranwendung verwendet werden, wobei auch weniger als vier Einzeldetektoren (Quadranten), aber auch mehr als vier Einzeldetektoren vorgesehen sein können.

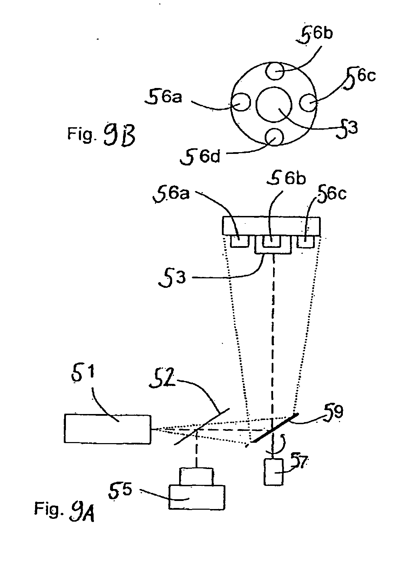

Eine weitere Nachführeinrichtung ist in Fig. 9 dargestellt. Dabei zeigt Fig. 9A eine schematische Ansicht der Nachführeinrichtung, und Fig. 9B zeigt eine Detailansicht eines Retroreflektors 53 mit darum angeordneten Leuchtdioden.

Wie bei Fig. 7 und 8 ist in Fig. 9A eine Lichtquelle 51, ein Spiegel 59, ein Spiegelantrieb 57 sowie ein Retroreflektor 53 bereitgestellt. Die Funktion dieser Elemente entspricht der bereits unter Bezugnahme auf Fig. 7 und 8 erläuterten.

In Fig. 9 sind um den Retroreflektor 53 herum Lichtquellen, im dargestellten Beispiel vier Leuchtdioden 56a-56d, angeordnet. Die Anzahl vier ist lediglich als Beispiel zu verstehen, und es kann auch eine andere Anzahl von Leuchtdioden vorgesehen sein. Zudem können bei anderen Ausführungsbeispielen auch andere Lichtquellen als Leuchtdioden, beispielsweise Laserdioden, verwendet werden.

Zudem weist Fig. 9 einen Strahlteiler 52 auf, mit welchem von den Leuchtdioden 56a-56d ausgesendetes sowie von dem Retroreflektor 53 reflektiertes Licht über den Spiegel 59 und den Strahlteiler 52 zu einer Detektoranordnung 55 gelenkt wird. Die Detektoranordnung 55 ist ausgestaltet, das von den Leuchtdioden 56a-56d emittierte Licht zu detektieren. Bei dem Ausführungsbeispiel der Fig. 9 können die Leuchtdioden 56a-56d beispielsweise kontinuierlich emittierende Leuchtdioden sein. In einem derartigen Fall kann die Detektoranordnung 55 beispielsweise eine digitale Kamera umfassen, welche ein Bild entsprechend dem "Sichtbereich" des von der Lichtquelle 51 emittierten Lichtkegels entspricht, und durch Bildverarbeitung die Position der Leuchtdioden bestimmen und den Lichtkegel gegebenenfalls entsprechen nachführen.

Ähnlich wie auf Basis der Quadranten des Quadrantendetektors in Fig. 7 und 8 kann so auch auf Basis des detektierten Lichts der Leuchtdiode 56a-56d eine Relativbewegung des Lichtkegels zu dem Retroreflektor 53 erkannt werden, bevor der Detektor 53 den Lichtkegel verlässt.

Bei einem anderen Beispiel unterscheidet sich das Licht der Leuchtdioden 56a-56d vom Licht der Lichtquelle 51, beispielsweise indem es eine andere Wellenlänge und/oder eine andere Modulation aufweist. Zudem unterscheidet sich bei einem Ausführungsbeispiel das von den Leuchtdioden 56a-56d emittierte Licht voneinander, beispielsweise in dem für jede Leuchtdiode eine andere Modulation und/oder eine andere Lichtwellenlänge verwendet wird.

Das Licht der Leuchtdioden kann getrennt voneinander detektiert werden, beispielsweise auf Basis der oben erwähnten unterschiedlichen Modulation oder unterschiedlichen Wellenlänge. Zudem kann die Detektoranordnung 55 auch zur Detektion des von dem Retroreflektor 53 reflektierten Lichts und damit zur Positionsbestimmung wie bereits oben erläutert dienen. Hierfür kann jedoch auch eine separate Detektoranordnung vorgesehen sein.

Wenn beispielsweise in der Detektoranordnung 55 das Licht der Leuchtdiode 56a nicht oder nur noch abgeschwächt detektiert wird und das Licht der Leuchtdiode 56c nach wie vor in voller Stärke detektiert wird, deutet dies auf eine Relativbewegung des Lichtkegels relativ zum Retroreflektor 53 zu der Leuchtdiode 56c von der Leuchtdiode 56a weg hin, und eine entsprechende (nicht dargestellte) Steuerung entsprechend der in Fig. 8 dargestellten Steuerung kann den Spiegelantrieb 57 dann ansteuern, um den Spiegel 59 zu bewegen, den Lichtkegel entsprechend nachzuführen.

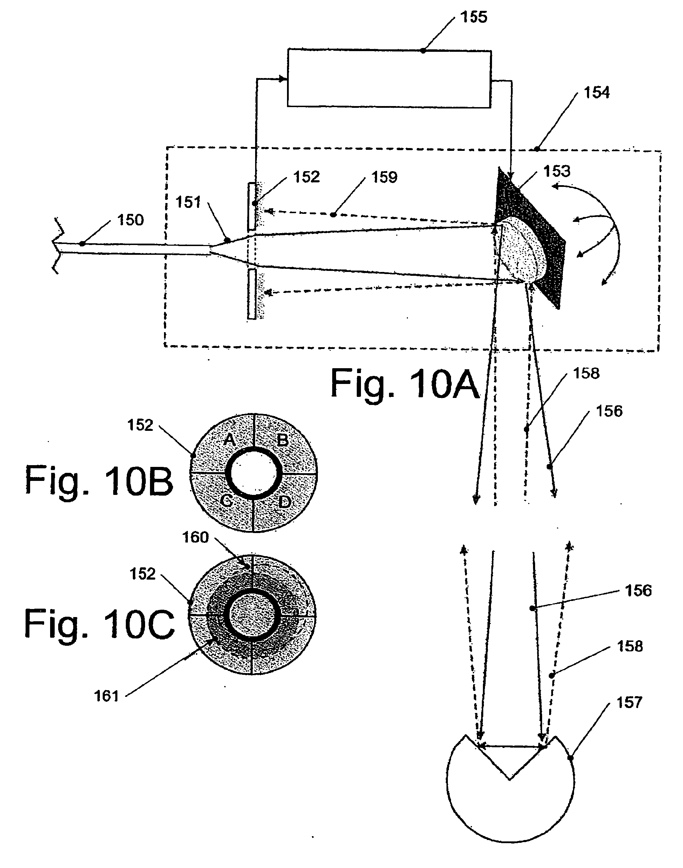

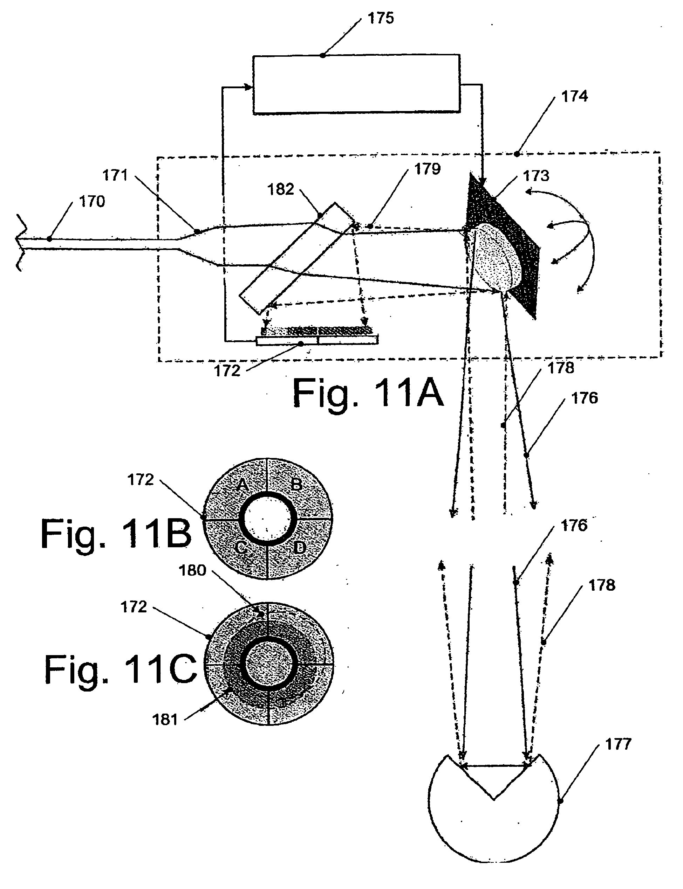

In Fig. 7-9 sind neben dem Reflektor ein Detektor (im Falle der Fig. 7 und 8) oder Markierungen (im Falle der Fig. 9) vorgesehen um die Nachführung zu gleichtern. Ein entsprechende Detektor kann auch auf Seite der jeweiligen Lichtquelle bereitgestellt sein. Entsprechende Beispiele (nicht durch die Ansprüche abgedeckt) werden nunmehr unter Bezugnahme auf Fig. 10 und 11 erläutert.

In Fig. 10 ist eine Beleuchtungseinrichtung dargestellt. Dabei ist in Fig. 10A eine Übersicht über die Beleuchtungseinrichtung dargestellt, Fig. 10B zeigt ein Beispiel für einen verwendbaren Detektor und Fig. 10C veranschaulicht ein Auftreffen eines Lichtstrahls in verschiedenen Positionen auf den Detektor der Fig. 10B.

Wie in Fig. 10A dargestellt, wird in Fig. 10 ein Lichtstrahl, beispielsweise ein Laserstrahl, über einen Lichtleiter 150, beispielsweise eine Glasfaser, zugeführt. Beim Austritt aus dem Lichtleiter 150 weitet sich der Lichtstrahl 151 auf, wofür eine entsprechende Optik (nicht dargestellt) bereitgestellt sein kann, und geht durch ein zentrisch angeordnetes Loch eines Detektors 152 hindurch. Der Detektor 152 wird später noch näher erläutert.

Der Strahl trifft dann auf einen beweglichen Spiegel 153 und wird als von dem Spiegel 153 reflektierter Strahl 156 zu einem Reflektor 157, beispielsweise einem Retroreflektor, gelenkt. Wie durch die durchgezogenen Linien 156 angedeutet, trifft dabei nur ein Teil des Lichstrahls auf den Reflektor 157 oder, in anderen Worten, der Licht-strahl 156 ist derart aufgeweitet, dass er eine Fläche größer als eine entsprechende Querschnittsfläche des Reflektors 157 ausleuchtet.

Von dem Reflektor 157 reflektiertes Licht ist in Fig. 10A generell mit gestrichelten Linien dargestellt. Zunächst wird der Lichtstrahl als Lichtstrahl 158 vom Reflektor 157 auf den Spiegel 153 zurückreflektiert, wobei wie durch die gestrichelten Linien dargestellt, nur ein Teil des Lichtstrahls auch beim Spiegel 153 ankommt. Von dem Spiegel 153 wird das Licht schließlich auf den Detektor 152 gelenkt. In Abhängkeit von dem Detektor 152 detektierten Signal steuert eine Steuerung 155 den Spiegel 153 zur Bewegung an. Der Detektor 152 und der Spiegel 153 können dabei in einem Messkopf 154 einer entsprechenden Messvorrichtung angeordnet sein.

Es ist zu bemerken, dass zur Auswertung des reflektierten Lichts zwecks Bestimmung der Position ein weiterer Detektor vorhanden sein kann, wie beispielsweise die Detektoren 13 oder 14 der Fig. 1 oder dem Phasenmesser 127 der Fig. 6. Ebenso kann der Detektor 152 zusätzlich zur Detektion für die Positionsbestimmung verwendet werden.

Der Detektor 152 kann insbesondere ein Quadratendetektor, beispielsweise eine Quadrantendiode, wie in Fig. 10B dargestellt sein. Der in Fig. 10B dargestellte Quadratendetektor 152 weist vier Segmente, A, B, C und D auf, welche um eine kreisförmige Öffnung, doch welche der Lichtstrahl 152 hindurchgeht, herum angeordnet sind. Bei anderen Ausführungsbeispielen können statt einer Qudratendiode auch andere positionssensitive Detektoren, wie ein "Position Sensitive Device" (PSD) verwendet. werden, oder es können mehr oder weniger als vier Sektoren verwendet werden.

Fällt der von dem Spiegel 153 zurückreflektierte Strahl 159 zentrisch auf den Detektor 152, entspricht das der in Fig. 10C mit 161 bezeichneten Situation. In diesem Fall werden die vier Quadraten A, B, C und D gleichmäßig beleuchtet und liefern ein gleich starkes Signal. Wandert nun beispielsweise durch Wanderung des Reflektors 157 oder des Messkopfs 154 der Lichtstrahl 159 auf dem Detektor 152, kann sich eine Situation wie in Fig. 10C durch 160 gekennzeichnet ergeben. In diesem Fall liefert das Segment B das stärkste Signal, das Segment C das schwächste Signal, und die Segmente A und D ein dazwischenliegendes Signal. In diesem Fall kann die Steuerung 155 den Spiegel 153 derart ansteuern, dass die durch 161 in Fig. 10C gekennzeichnete Situation möglichst wieder hergestellt wird.

In Fig. 10 ist der Detektor 152 in dem Strahlengang des Strahls 151 angeordnet. Ebenso kann ein Strahlteiler bereitgestellt werden, um den Lichtstrahl 159 oder einen Teil davon aus dem Strahlengang auszukoppeln und zu einem entsprechenden Detektor zu lenken, siehe in Fig. 11.

Dabei entspricht ein Lichtleiter 170, ein Spiegel 173, ein Messkopf 174, ein Reflektor 177 und eine Steuerung 175 den entsprechenden Elementen in Fig. 10A, das heißt, dem Lichtleiter 150, dem Spiegel 153, dem Messkopf 154, dem Reflektor 157 und der Steuerung 155, und werden nicht nochmals beschrieben. In ähnlicher Weise entsprechen ein Strahl 171, ein reflektierter Strahl 176, ein von dem Reflektor 177 zurürckreflektierter Strahl 178 und ein von dem Spiegel 173 wiederum reflektierter Strahl 179 den Strahlen 151, 156, 158 bzw. 159 der Fig. 10 und werden daher ebenfalls nicht nochmals detaillierter erläutert.

In Fig. 11 ist kein Detektor 152, wie in Fig. 10A im Strahlengang angeordnet. Stattdessen ist in Fig. 11, wie in Fig. 11A dargestellt, ein Strahlteiler 182 bereitgestellt, welcher den Lichtstrahl 179 aus dem Strahlengang auskoppelt und zu einem Detektor 172 lenkt, welcher im Wesentlichen die gleiche Funktion wie der Detektor 152 der Fig. 10A hat.

Wie in Fig. 11B dargestellt, kann auch der Detektor 172 ein Quadrantendetektor wie der Detektor 152 aus Fig. 10B sein. Auch hier kann ein zentraler Bereich freigelassen worden sein, wobei im Falle der Fig. 11 die Größe dieses zentralen Bereichs nicht an den Strahl 151 beziehungsweise 171 angepasst sein muss, sondern im Wesentlichen beliebig gewählt sein kann. Auch kann derzentrale Bereich in diesem Fall undurchsichtig sein. Ebenso kann der zentrale Bereich bei dem Detektor 172 auch weggelassen sein oder im Wesentlichen weggelassen sein.

Wie bereits unter Bezugnahme auf Fig. 10C erläutert, kann durch den Detektor 172 eine Abweichung des Lichtstrahls von einem zentralen Auftreffen auf den Detektor festgestellt werden. Dabei entsprechen Lichtstrahlen 180 und 181, welche in Fig. 11C als Beispiel dargestellt sind, den Lichtstrahlen 160 und 161 der Fig. 10C. Insbesondere ist bei einem Auftreffen, wie durch 180 in Fig. 11C gekennzeichnet, ein Signal eines Segments B stärker als ein Signal eines Segments C des Detektors 172, während Signale der Segmente A und D dazwischenliegen. In diesem Fall kann die Steuerung 175 den Spiegel 173 ansteuern, wieder den Zustand 181 aus Fig. 11C herzustellen, in welchem alle Segmente ein im Wesentlichen gleiches Signal liefern.

Bis auf die oben erläuterten Unterschiede treffen alle Variationsmöglichkeiten und Erläuterungen, welche in Bezugnahme auf Fig. 10 gegeben wurden, auch auf Fig. 11 zu.

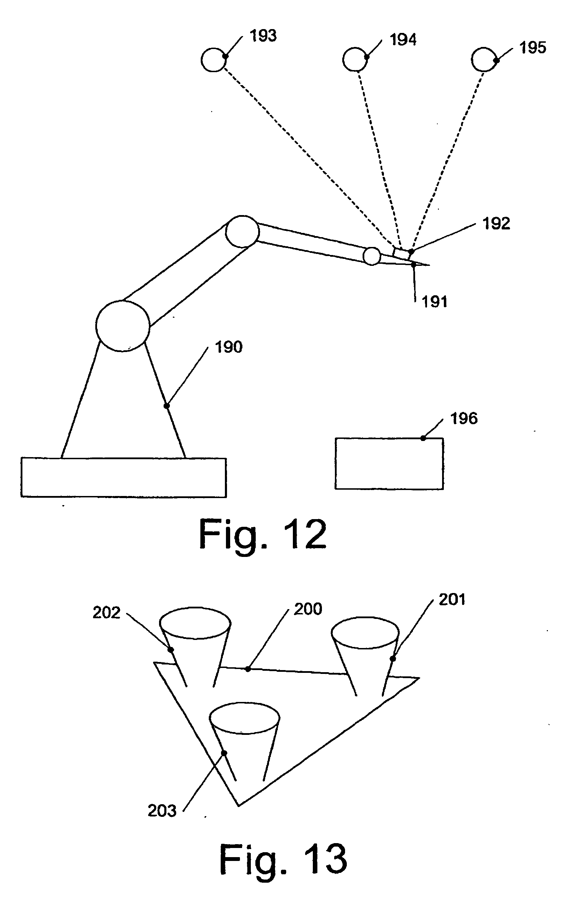

Bisher wurde davon ausgegangen, dass ein Reflektor, wie beispielsweise der Reflektor 25 der Fig. 1 an einem beweglichen Objekt angebracht ist, dessen Position zu bestimmen ist, und der Reflektor von mehreren Lichtquellen angestrahlt wird und das jeweils reflektierte Licht gemessen wird, wie dies unter Bezugnahme auf Fig. 1 beschrieben wurde. Es ist jedoch grundsätzlich auch die umgekehrte Anordnung möglich, das heißt, an einem beweglichen Objekt werden beispielsweise in einem Messkopf Vorrichtungen zum Ausstrahlen von ein oder mehreren Lichtstrahlen bereitgestellt, mit welchem Licht auf ortsfeste Reflektoren gestrahlt wird. Ein derartiges Ausführungsbeispiel wird nunmehr unter Bezugnahme auf Fig. 12 erläutert.

In Fig. 12 ist ein Roboterarm 190, welcher im Wesentlichen dem Roboterarm 2 aus Fig. 1 entspricht, dargestellt. Der Roboterarm 190 weist mehrere Achsen auf, um welche er gedreht bzw. geschwenkt werden kann. An einem letzten Glied 191 des Roboterarms 190 kann ähnlich wie unter Bezugnahme auf Fig. 1 bereits erläuert, ein Messgeber oder ein Werkzeug angebracht sein. Die Position des letzten Gliedes 191 ist zu bestimmen, das heißt, das letzte Glied 191 stellt ein Objekt dar, dessen Position zu bestimmen ist.

Zur Bestimmung der Position ist an dem letzten Glied 191 eine Messvorrichtung 192 angebracht, welche durch optische Messung Entfernungen zu stationären Retroreflektoren 193, 194 und 195, wie durch gestrichelte Linien angedeutet, misst. Insbesondere kann die Messvorrichtung 192 Lichtstrahlen zu den Retroreflektoren 193, 194 und 195 senden und dann zurückreflektiertes Licht detektieren. Durch die Bestimmung der Entfernungen zu den drei Retroreflektoren 193, 194 und 195, welche nicht in einer Linie angeordnet sind, ist dann durch Trilateration eine Bestimmung der Positionen in drei Raumrichtungen möglich. Die Auswertung des detektierten Lichts und die Bestimmung der Position kann dabei durch eine Auswerteeinheit 196 erfolgen.

Die Entfernungsmessung kann dabei im Wesentlichen wie unter Bezugnahme auf Fig. 1 erläutert vonstatten gehen und wird dabei nicht nochmals erläutert.

Die Messvorrichtung 192 kann die Retroreflektoren 193, 193 und 195 nacheinander, das heißt sequentiell, anmessen. In diesem Fall kann wiederum eine Lenkeinrichtung wie unter Bezugnahme auf Fig. 2 bis 11 erläutert bereitgestellt sein, um das Licht beispielsweise mittels eines Spiegels oder eines anderen optischen Elements in Richtung des jeweiligen Retrreflektors zu lenken.

Bei anderen Ausführungsbeispielen umfasst die Messvorrichtung 192 beispielsweise drei separate Messeinrichtungen, wobei jede Messeinrichtung einen der Retroreflektoren anmisst. Statt der Retroreflektoren können, wie bereits erläutert, auch andere reflektierende oder streuende Eleemente vorgesehen sein.

Ein Beispiel für eine Messvorrichtung mit drei Messeinrichtungen ist schematisch in Fig, 13 dargestellt. Bei dem Beispiel von Fig. 13 sind drei Messeinrichtungen 201, 202, 203, welche durch Lichtkegel symbolisiert sind, in einer Dreiecksform 200 angeordnet. Es ist zu beachten, dass hierzu die Messeinrichtungen 201, 202 und 203 auf einer dreieckförmigen Platte angeordnet sein können, jedoch auch auf jedem anderen Träger angeordnet sein können. Die Lichtkegel der Messeinrichtungen 201, 202 und 203 können verschwenkbar sein, um einen jeweiligen Reflektor, beispielsweise einen der Reflektoren 193, 194 und 195, zu bestrahlen. Hierfür kann wiederum in jeder der Messeinrichtungen 201, 202 und 203 eine Lichtlenkeinrichtung, wie beispielsweise unter Bezugnahme auf Fig. 2 bis 11 diskutiert, bereitgestellt sein.

Bei einem Ausführungsbeispiel können die von den Messeinrichtungen 201, 202 und 203 ausgesendeten Lichtstrahlen auf verschiedene Weise gekennzeichnet sein, um eine Trennung des reflektierten Lichts zu ermöglichen. Beispielsweise können verschiedene Modulationen, z. B. verschiedene Pulsraten, verwendet werden, oder es können verschiedene Wellenlängen in Verbindung mit entsprechenden Filtern verwendet werden.

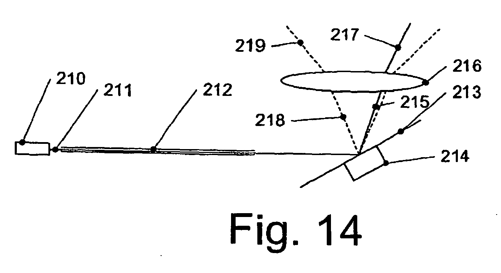

Ein weiteres Ausführungsbeispiel einer geeigneten Messeinrichtung mit Lichtlenkvorrichtung ist in Fig. 14 dargestellt. Die Messeinrichtung aus Fig. 14 kann jedoch nicht nur in dem Ausführungsbeispiel der Fig. 12, sondern beispielsweise auch in dem Ausführungsbeispiel der Fig. 1 eingesetzt werden.

Bei dem Ausführungsbeispiel der Fig. 14 erzeugt eine Lichtquelle 210, beispielsweise ein Laser, einen Lichtstrahl 211. Der Lichtstrahl 211 wird über einen Lichtleiter 212, beispielsweise eine Glasfaser, zu einem Spiegel 213 gelenkt. Durch Vewendung des Lichtleiters 212 kann die Lichtquelle 210 entfernt von dem Spiegel 213 angeordnet sein. Beispielsweise kann in dem Ausführungsbeispiel der Fig. 12 der Spiegel 213 in der Messvorrichtung 192 angeordnet sein, während die Lichtquelle 210 sogar außerhalb des Roboterarms 190 angeordnet sein kann. Die Lichtquelle 210 kann insbesondere, wie bereits diskutiert, ein Kurzpulslaser sein.

Der Spiegel 213 ist bei dem Ausführungsbeispiel von Fig. 14 wiederum ein beweglicher Spiegel, welcher über eine Einrichtung 214 bewegbar ist. Beispielsweise kann der Spiegel 213 ein mikroelektromechanisches System sein, das heißt, ein MEMS-Spiegel. Bei derartigen Spiegeln werden mechanische Elemente zusammen mit einem Aktuator, beispielsweise auf einem Siliziumsubstrat integriert.

Bei dem Ausführungsbeispiel der Fig. 14 kann der Spiegel 213 beispielsweise in zwei zueinander senkrecht in Raumrichtungen verkippbar sein. Somit kann ein reflektierter Strahl 215 innerhalb der Grenzen, welche in Flg. 14 durch gestrichelte Linien 218 dargestellt sind, verstellt werden, beispielsweise um einen gewünschten Retroreflektor oder anderen Reflektor zu bestrahlen.

Bei MEMS-Spiegeln ist der Verstellbereich des reflektierten Strahls 215 dabei typischerweise im Bereich von $\pm$ 10° um eine Mittelstellung herum.

Zur Vergrößerung dieses Verstellbereichs kann eine Weitwinkeloptik 216 vorgesehen sein, welche in Fig. 14 als einfache Linse dargestellt ist, jedoch auch mehrere Linsen oder andere optische Elemente umfassen kann. Hierdurch kann ein Verstellbereich des durch die Optik 216 hindurchgegangen Strahls 217 vergrößert werden, wie durch gestrichelte Linien 219 angedeutet, um einen größeren Winkelbereich erfassen zu können.

Das Ausführungsbeispiel der Fig. 14 dient lediglich als Beispiel, und auch andere Detektoranordnungen, beispielsweise Detektoren auf Basis einer Analyse einer von entsprechenden Digitalkameras aufgezeichneten Bildes des Raumbereichs, in welchem die Positionsbestimmung durchgeführt werden soll, können verwendet werden.

Bei dem Ausführungsbeispiel der Fig. 14, aber auch bei anderen Ausführungsbeispielen kann der Lichtkegel beispielsweise derart sein, dass er eine um 50-100% größere Fläche als die Fläche des jeweilig verwendeten Retroreflektors ausleuchtet. Es können jedoch auch weiter aufgeweitete Lichtkegel verwendet werden.

Wie bereits erwähnt können die Nachführeinrichtungen, welche unter Bezugnahme auf Fig. 2-6 und 14 erläutert wurden, beispielsweise in dem Ausführungsbeispiel der Fig. 1 oder der Fig. 12 eingesetzt werden, sie können jedoch auch bei anderen Vorrichtungen eingesetzt werden, bei welchen eine zweidimensionale oder dreidimensionale Position eines Objekts, beispielsweise eines mit einem Retroreflektor versehenen Objekts, durch Beleuchten des Objekts mit Strahlung, beispielsweise Laserstrahlung, und Analyse des reflektierten Lichtes bestimmt wird.

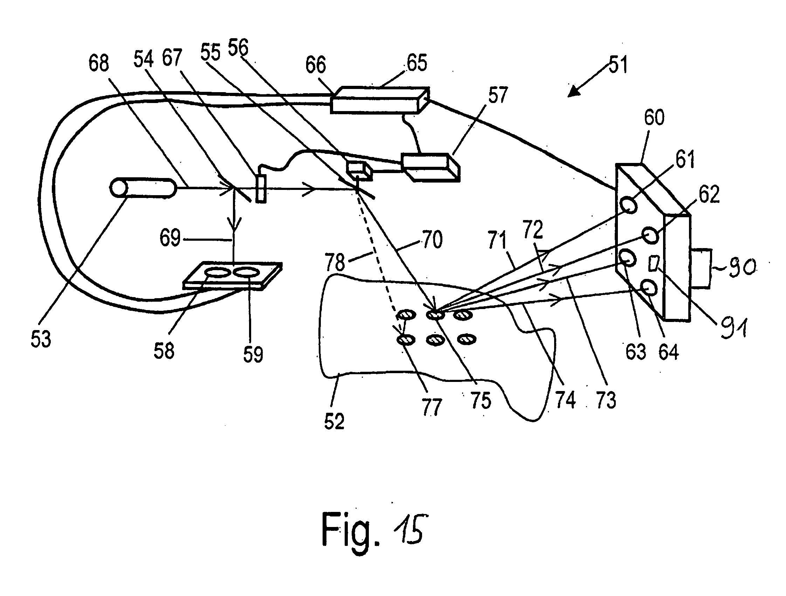

Auf optische Weise kann nicht nur die Position eines Objekts in einem Raumbereich bestimmt werden, basierend auf ähnlichen Prinzipien kann auch eine dreidimensionale Oberfläche vermessen werden. Ein Ausführungsbeispiel einer derartigen Vorrichtung wird nunmehr unter Bezugnahme auf Fig. 15 erläutert.

Fig. 15 ist eine schematische Darstellung einer Vorrichtung 51 zum Vermessen einer Oberfläche 52 nach einem Ausführungsbeispiel.

Die Vorrichtung 51 umfasst eine Lichtquelle 53, die mit einer Repetitionsrate eine Folge kurzer Lichtpulse erzeugt, eine Lichtlenkeinrichtung, die einen verstellbaren Umlenkspiegel 55 und eine zugehörige Verstelleinrichtung oder Aktorik 56 aufweist, eine Detektoranordnung 60 mit mehreren Fotodetektoren 61-64 und eine Auswerteschaltung 65. Von der Lichtquelle 53 wird die Folge von Lichtpulsen in einem Lichtstrahl auf den Umlenkspiegel 55 gestrahlt. Abhängig von der Stellung des Umlenkspiegels 55 wird die Folge von Lichtpulsen als Lichtstrahl 70 auf einen Oberflächenbereich 75 der Oberfläche 52 gelenkt. Eine charakteristische Ausdehnung des Oberflächenbereichs 75 ist dabei bestimmt durch den Durchmesser des Lichtstrahls 70, d.h. der Folge von Lichtpulsen, beim Auftreffen auf die Oberfläche 52. Wenn der Lichtstrahl 70 auf die Oberfläche 52 fokussiert wird, kann der Durchmesser des O-berflächenbereichs 75 im idealfall im Wesentlichen beugungsbegrenzt sein.

Die Folge von Lichtpulsen wird an dem Oberflächenbereich 75 gestreut. Die Fotodetektoren 61-64 der Detektoranordnung 10 empfangen Lichtsignale 71-74, die jeweils einen Anteil der von dem Oberflächenbereich 75 gestreuten Folge von Lichtpulsen beinhalten. Die Fotodetektoren 61-64 detektieren eine empfangene Lichtenergie bzw. Lichtintensität als Funktion der Zeit. Die Auswerteschaltung 65 ermittelt für die von den Fotodetektoren 61-64 erfassten Lichtsignale eine Phasenlage relativ zu der eingestrahlten Folge von Lichtpulsen. Die Phasenlage steht in einer Beziehung zur Laufzeit der Lichtpulse von dem Oberflächenbereich 75 zu den Fotodetektoren 61-64 und somit zum Abstand des Oberflächenbereichs 75 zu den Detektoren. Auf diese Weise kann die Position des Oberflächenbereichs 75 ermittelt werden. Die Ermittlung der Phasenlage durch die Auswerteschaltung 65 kann beispielsweise auf Signalkomponenten der an den Fotodetektoren 61-64 erfassten Lichtsignale beruhen, die eine Frequenz aufweisen, die ein Vielfaches der Repetitionsrate ist.

Die Vorrichtung 51 umfasst weiterhin zwei Referenzsignaldetektoren 58, 59, auf die von einem Strahlteiler 54 die Folge von Lichtpulsen in einem Teilstrahl 69 als Referenzsignal gelenkt wird. Aus Gründen der Einfachheit wird hier davon gesprochen, dass sowohl in dem von dem Strahlteiler 54 zu dem Umlenkspiegel 55 transmittierten Lichtstrahl als auch in dem von dem Strahlteiler 54 zu den Referenzsignaldetektoren 58, 59 gelenkten Teilstrahl 69 die Folge von Lichtpulsen eingestrahlt wird, wobei es sich versteht, dass jeweils nur ein Anteil der Lichtintensität jedes Lichtpulses in dem Teilstrahl 69 zu den Referenzsignaldetektoren 58, 59 bzw. in dem Teilstrahl 70 auf die Oberfläche 52 gelenkt wird. Das Referenzsignal 69 wird von beiden Referenzsignaldetektoren 58, 59 erfasst und an einem Referenzsignaleingang 66 an die Auswerteschaltung 65 bereitgestellt. Gegebenenfalls kann ein Strahlaufweiter in dem Strahlengang des Teilstrahls 69 angeordnet sein, um sicherzustellen, dass der Teilstrahl 69 von beiden Referenzsignaldetektoren 58, 59 erfasst wird. Das von den Referenzsignaldetektoren 58, 59 jeweils bereitgestellte Referenzsignal von der Auswerteschaltung 65 wird verwendet, um die Phasenlagen der von dem Oberflächenbereich 75 gestreuten Folge von Lichtpulsen zu ermitteln.

Die Vorrichtung 51 umfasst weiterhin eine Recheneinheit 57, die mit der Auswerteschaltung 65 gekoppelt ist, um basierend auf den ermittelten Phasenlagen die Position des Oberflächenbereichs 75 zu bestimmen.

Unter der Bestimmung der Position des Oberflächenbereichs 75 wird hier die Ermittlung von drei Koordinaten eines Punktes des Oberflächenbereichs 75 verstanden. Da der Oberflächenbereich 75 im Idealfall eine kleine Abmessung hat, die durch den Durchmesser des eingestrahlten Lichtstrahls 70 bestimmt ist, wird vereinfachend auf die Position des Oberflächenbereichs Bezug genommen werden, auch wenn dieser selbst eine gewisse, geringe Ausdehnung aufweist.

Um die Abmessung des Oberflächenbereichs 75 zu reduzieren und die laterale Auflösung bei der Vermessung der Oberfläche 52 zu erhöhen, ist eine einstellbare Fokussierungsoptik 67 in dem Strahlengang zwischen dem Strahlteiler 54 und dem Umlenkspiegel 55 vorgesehen. Die Fokussierungsoptik 67 wird von der Recheneinheit 57 derart angesteuert, dass der Lichtstrahl 70 auf der Oberfläche 52 fokussiert, im Idealfall beugungsbegrenzt fokussiert wird.

Da bei der Vorrichtung 51 die Position des Oberflächenbereichs 75 basierend auf den von den Fotodetektoren 61-64 erfassten Lichtsignalen 71-74 und dem von den Referenzsignaldetektoren 58 und 59 erfassten Referenzsignal 69 ermittelt wird, muss zur Positionsbestimmung des Oberflächenbereichs 75 bei der Vorrichtung 51 die Winkelposition des Umlenkspiegels 55 nicht genau bekannt sein. Weiterhin wird durch Verwendung einer Detektoranordnung 60, bei der eine Anzahl von Fotodetektoren 61-64 verwendet wird, die größer als die Anzahl der zu bestimmenden Koordinaten des Oberflächenbereichs 75 ist, erreicht, dass die Positionsbestimmung robust erfolgen kann, selbst wenn die genaue Position des Umlenkspiegels 55 nicht bekannt ist.

Die Recheneinheit 57 ist mit der Aktorik 56 des Umlenkspiegels 55 gekoppelt, um durch Steuern der Aktorik 56 die Position des Umlenkspiegels 55 einzustellen. Durch Verstellen des Umlenkspiegels 55 kann die Folge von Lichtpulsen als Lichtstrahl 28 auf einen anderen Oberflächenbereich 77 gelenkt werden, um dessen Position zu bestimmen. Um die Oberfläche 52 abzutasten, kann der Umlenkspiegel 55 kardanisch aufgehängt sein. Aufgrund der Robustheit der Positionsbestimmung bei der Vorrichtung 51 können jedoch auch andere, einfachere Ablenksysteme verwendet werden, beispielsweise eine Paar von um zwei zueinander orthogonale Achsen verkippbare oder drehbare Spiegel. Anstelle von Umlenkspiegeln können auch andere geeignete optische Elemente verwendet werden, um die Oberfläche abzutasten, beispielsweise ein Umlenkprisma oder dergleichen.

Da die Positionen der verschiedenen Oberflächenbereiche sequentiell bestimmt werden, wobei die Positionsbestimmung für jeden der Oberflächenbereiche auf dieselbe Weise erfolgt, wird nachfolgend nur die Positionsbestimmung für einen Oberflächenbereich näher beschrieben. Zum Vermessen der Oberfläche werden die Positionen mehrerer Oberflächenbereiche jeweils auf die beschriebene Weise nacheinander ermittelt.

Die Lichtquelle 53 der Vorrichtung 51 erzeugt beispielsweise ein optisches Signal, dessen Intensität mit einer periodischen Funktion moduliert ist, wobei die Modulation eine Grundfrequenz $f0$ sowie ausgeprägte Anteile von Oberwellen der Grundfrequenz $f0$, d.h. ausgeprägte Frequenzkomponenten mit Frequenzen aufweist, die Vielfache von $f0$ sind. Ein solches Signal wird beispielsweise durch einen Kurzpulslaser erzeugt, der eine Folge von Lichtpulsen in einem wohldefinierten zeitlichen Abstand $T0=1/f0$, d.h. mit einer Repetitionsrate $f0$, erzeugt, wobei die Dauer jedes Pulses kurz ist im Vergleich zum zeitlichen Abstand $T0$ zwischen aufeinanderfolgenden Pulsen.

Die Dauer jedes Lichtpulses kann im Vergleich zu dem Zeitabstand $T0$ zwischen aufeinanderfolgenden Lichtpulsen sehr klein sein, beispielsweise von der Größenordnung $1 \cdot 10^{-5}$. Bei der Lichtquelle 53 können die Repetitionsrate $f0$ und die Zeitdauer jedes Pulses geeignet in Abhängigkeit von einer gewünschten Messgenauigkeit bei der Positionsbestimmung, von einer anfänglichen Unsicherheit über die Position des Oberflächenbereichs, von der Frequenz der Signalkornponente des an den Fotodetektoren 61-64 detektierten Lichtsignals, für die die Phasendifferenz bestimmt wird, oder in Abhängigkeit von weiteren Faktoren gewählt werden. Soll zur Bestimmung der Phasendifferenz die n-te Oberwelle von $f0$ verwendet werden, werden die Dauer jedes Lichtpulses und der Zeitabstand $T0$ zwischen aufeinanderfolgenden Lichtpulsen so gewählt, dass die von der Lichtquelle 53 ausgegebene Folge von Lichtpulsen noch ein ausreichendes spektrales Gewicht bei der Frequenz $n \cdot f0$ aufweist. Die Pulse können eine Folge von Rechteckspulsen sein, aber es können ebenso andere geeignete Pulsformen gewählt werden, beispielsweise das Quadrat eines hyperbolischen Secans oder eine Gaussfunktion.

Eine geeignete Folge von Lichtpulsen kann von verschiedenen Lasern erzeugt werden, die für die Erzeugung kurzer Lichtpulse eingerichtet sind. Insbesondere können optische Frequenzsynthesizer verwendet werden. Beispielsweise kann ein elektrisch gepumpter Diodenlaser, z.B. ein güteschalteter Laser, ein verstärkungsgeschalteter (gain switched) Laser, ein aktiv oder passiv modengekoppelter Laser oder ein Laser mit hybrider Modenkopplung, oder ein modengekoppelter oberflächenemittierender Laser mit vertikalem Resonator (Vertical-Cavity Surface Emitting Laser, VCSEL) als Lichtquelle 53 verwendet werden. Es kann auch ein optisch gepumpter Laser, beispielsweise ein passiv modengekoppelter oberflächenemittierender Laser mit externem vertikalen Resonator (Vertical External Cavity Surface Emitting Lasers, VECSEL) oder ein auf photonische-Kristallfasern basierender Laser (photonic crystal-fiber laser) als Lichtquelle 53 verwendet werden. Beispielhafte Pulsdauern der Lichtquelle 53 liegen in einem Bereich von 100 fs und 100 ps. Beispielhafte Repetitionsraten liegen in einem Bereich von 50 MHz bis 50 GHz. Beispielhafte mittlere Leistungen liegen in einem Bereich von 1 mW bis 10 W. Beispielhafte Werte für den Pulsjitter liegen zwischen 10 fs und 1 ps Effektivwert (quadratischer Mittelwert).

Wie in Fig. 15 dargestellt, wird ein Teilstrahl der von der Lichtquelle 53 ausgegebenen Folge von Lichtpulsen über den Strahlteiler 54 als Referenzsignal 69 zu den Referenzsignaldetektoren 58, 59 gelenkt. Falls erforderlich, kann im Strahlengang von dem Strahlteiler 54 zu den Referenzsignaldetektoren 58, 59 ein optisches Element zur Strahlaufteilung, insbesondere ein Strahlteiler vorgesehen sein um sicherzustellen, dass der Teilstrahl 69 sowohl auf den Referenzsignaldetektor 58 als auch auf den Referenzsignaldetektor 59 trifft. Ein weiterer Teilstrahl 70 wird über den Umlenkspiegel 55 auf den Oberflächenbereich 75 der Oberfläche 52 gelenkt. Hier wird angenommen, dass der Oberflächenbereich, auf den die Folge von Lichtpulsen eingestrahlt wird, lichtstreuende Eigenschaften aufweist. Die Folge von Lichtpulsen wird von dem Oberflächenbereich 75 in eine Vielzahl von Raumrichtungen gestreut. Das Streulicht beinhaltet auch die Folge von Lichtpulsen, die als Lichtsignale 71-74 in Richtung der Fotodetektoren 61-64 gestreut wird. Die Fotodetektoren 61-64 der Detektoranordnung 10 sind derart angeordnet, dass keiner der Fotodetektoren auf einer Geraden liegt, die durch einen Oberflächenbereich 75, 77, dessen Position zu bestimmen ist, und einen weiteren der Fotodetektoren geht. Bei der dargestellten Anordnung, bei der die vier Fotodetektoren 61-64 im Wesentlichen in einer Ebene derart angeordnet sind, dass nie mehr als zwei der Fotodetektoren 61-64 auf einer beliebig gewählten Geraden angeordnet sind, kann dies einfach erreicht werden, beispielsweise indem die Detektoranordnung 60 beabstandet von der Oberfläche 52 und in einem von 0° verschiedenen Winkel zu allen Verbindungsvektoren zwischen Oberflächenpunkten und Detektoranordnung 60 angeordnet wird. Aus den Phasenlagen der an den verschiedenen Fotodetektoren 61-64 erfassten Signalen kann in diesem Fall die Position des Oberflächenbereichs 75 bestimmt werden, da eine ausreichend hohe Anzahl von voneinander unabhängigen Phasenlagen ermittelbar ist.

Die Lichtsignale 71-74 werden von den Fotodetektoren 61-64 erfasst. Aufgrund der mit wohldefinierter Repetitionsrate erzeugten Lichtpulse kann der Signalanteil, der von Streuung der Folge von Lichtpulsen an dem Oberflächenbereich 75 herrührt, bei der Signalverarbeitung durch die Auswerteschaltung 65 durch geeignete Filterung bestimmt werden, so dass im Folgenden Signalanteile, die nicht durch das von dem Oberflächenbereich 75 in Richtung der Fotodetektoren 61-64 gestreute Licht verursacht werden, nicht weiter erörtert werden.

Sowohl die Fotodetektoren 61-64 als auch die ebenfalls als Fotodetektoren ausgestalteten Referenzsignaldetektoren 58, 59 erfassen eine auf sie einfallende Lichtenergie als Funktion der Zeit. Die unterschiedliche optische Weglänge eines Lichtpulses, um einerseits zu einem der Referenzsignaldetektoren 58, 59 und andererseits nach einer Streuung an dem Oberflächenbereich 75 zu einem der Fotodetektoren 61-64 zu gelangen, führt jeweils zu einer Zeitverschiebung $\tau_1$, $\tau_2$, $\tau_3$ bzw. $\tau_4$ zwischen der Ankunft ein- und desselben Lichtpulses an einem der Detektoren 61-64 und an den Referenzsignaldetektoren 58, 59, die gleich dem Unterschied in optischer Weglänge der Strahlengänge geteilt durch die Lichtgeschwindigkeit c ist. Da typischerweise nur ein geringer Anteil des auf die Oberfläche 52 eingestrahlten Lichts 70 von dem Oberflächenbereich 75 in Richtung eines der Fotodetektoren 61-64 gestreut wird, ist das Signal an den Fotodetektoren 61-64 gegenüber dem Referenzsignal an den Referenzsignaldetektoren 58, 59 abgeschwächt.

Die Weglängendifferenz ist für jeden der Fotodetektoren 61-64 gegeben durch die Differenz zwischen der optischen Weglänge von dem Strahlteiler 54 über den Umlenkspiegel 55 zu dem Oberflächenbereich 75 und weiter zu dem entsprechenden Fotodetektor 61-64 und der optischen Weglänge von dem Strahlteiler 54 zu den Referenzsignaldetektoren 58, 59. Dabei hängt der erstgenannte Weg von dem Strahlteiler 54 über den Umlenkspiegel 55 zu dem Oberflächenbereich 75 und weiter zu dem entsprechenden Fotodetektor 61-64 von der zu bestimmenden Position des Oberflächenbereichs 75 ab, während der Abstand von dem Strahlteiler 54 zu den Referenzsignaldetektoren 58, 59 durch die Vorrichtungsgeometrie bestimmt ist und als bekannt vorausgesetzt wird. Durch Messung der Zeitverschiebungen $\tau_1$, $\tau_2$, $\tau_3$ bzw. $\tau_4$ zwischen den an den Fotodetektoren 61-64 erfassten Lichtsignalen 71-74 und dem Referenzsignal 69, das durch die Referenzsignaldetektoren 58, 59 erfasst wird, kann die von dem Lichtpuls zurückgelegte optische Weglänge zwischen dem Strahlteiler 54 und jedem der Fotodetektoren 61-64 bestimmt werden.

Die Fotodetektoren 61-64 sowie die Referenzsignaldetektoren 58, 59 sind mit der Auswerteschaltung 65 gekoppelt, die eine Phasendifferenz zwischen den Lichtsignalen 71-74 und dem Referenzsignal 69 ermittelt.

Die Auswerteschaltung 65 bestimmt dann aus den Phasendifferenzen die Position des jeweils vermessenen Abschnitts der Oberfläche.

Um möglichst viel des von der Oberfläche gestreuten Lichtes aufzusammeln, kann vor den Detektoren 61-64 jeweils eine Sammellinse oder eine andere Sammeloptik angebracht sein. Um zu vermeiden, dass durch diese Fokussierung beispielsweise bei schrägem Lichteinfall ein Fokusspot diese Sektorfläche verlässt und somit keine Detektion mehr möglich ist, kann die Detektoranordnung 60 bei dem Ausführungsbeispiel von Fig. 15 durch einen Detektorantrieb 90 entsprechend geneigt werden. Bei einem anderen Ausführungsbeispiel ist für jeden einzelnen Detektor 61-64 ein Detektorantrieb vorgesehen, so dass die Detektoren individuell geneigt werden können. Der Detektorantrieb 90 kann beispielsweise einen sogenannten Voice Coil Motor oder Voice Coil Aktor enthalten. Derartige Aktoren werden auch als Tauchspulen bezeichnet und weisen insbesondere einen kleinen Bauraum auf. Es können jedoch auch andere Aktoren bzw. Motoren als Detektorantrieb verwendet werden.

Falls durch die Neigung eine wesentliche Positionsverschiebung einzelner Detektoren hervorgerufen wird, beispielsweise, wenn die gesamte Detektoranordnung geneigt wird, kann diese Neigung von der Auswerteschaltung 65 zusätzlich berücksichtigt werden.

Um eine Richtung der einfallenden Lichtstrahlen zu bestimmen, ist bei dem Ausführungsbeispiel von Fig. 15 ein weiterer Detektor 91 vorgesehen, welcher eine Richtung des Lichteinfalls bestimmt und auf Basis dessen der Detektorantrieb 90 oder einzelne Detektorantriebe der einzelnen Detektoren entsprechend angesteuert werden.

Die Funktion des Detektorneigers 90 sowie des weiteren Detektors 91 werden im Folgenden anhand von spezifischen Ausführungsbeispielen näher erläutert. Es ist zu bemerken, dass das Ausführungsbeispiel von Fig. 15 dabei nur eine Möglichkeit darstellt, bei welcher ein derartiger Detektomeiger implementiert sein kann. Generell kann ein derartiger Detektorantrieb zum Neigen eines Detektors, d.h. zum Ausrichten eines Detektors in Richtung eines einfallenden Lichtstrahls, bei Vorrichtungen zur Oberflächenvermessung verwendet werden, bei welchen ein Lichtstrahl auf die Oberfläche gelenkt wird und das reflektierte Licht detektiert wird.

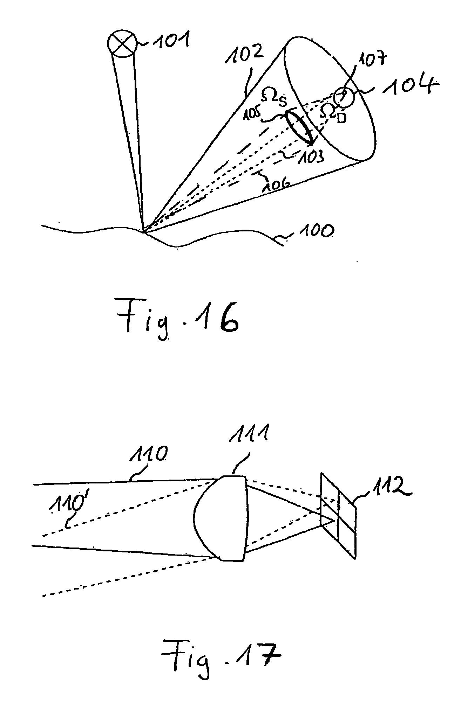

Fig. 16 zeigt ein Schemabild zur weiteren Erläuterung einer Nachführung eines Detektors in Abhängigkeit von einer Einfallsrichtung eines von einer Oberfläche reflektierten Strahls, wie beispielsweise oben für das Ausführungsbeispiel der Fig. 15 kurz erläutert. Bei der vereinfachten Darstellung der Fig. 16 wird eine Oberfläche 100 von einer Lichtquelle 101 fokussiert beleuchtet, wobei das Licht in einen Raumwinkel $\Omega_S$ entsprechend einem Lichtkegel 102 reflektiert wird. Ohne weitere Maßnahmen trifft nur das Licht in einem Raumwinkel $\Omega_D$ entsprechend einem Teillichtkegel 103 auf einen Detektor 104. Der Detektor 104 kann beispielsweise einer der Detektoren 61-64 des Ausführungsbeispiels von Fig. 15 sein.

Um die Lichtausbeute zu verbessern, kann wie bereits erläutert eine (nicht dargestellte) Sammellinse vor den Detektor 104 angeordnet sein, welche Licht von einem größeren Teil des Lichtkegels 102 als dem Teillichtkegel 103 auf den Detektor 104 bündelt. Hiermit kann das Signal-Rausch-Verhältnis bei der Detektion erhöht werden.

Statt einer Sammellinse kann auch allgemein eine Sammeloptik verwendet werden, die Sammellinse 105 aus Fig. 16 dient hier lediglich als Beispiel.

Die Sammellinse 105 verringert den Durchmesser eines Spots 107 auf dem Detektor 104 entsprechend der numerischen Apertur der Sammellinse 105. Zudem bewirkt eine derartige Sammellinse oder andere Sammeloptik, dass sich die Lage des Spots 107 auf dem Detektor 104 bei einer Variation des Lichteinfallswinkels auf die Linse 105. Die Verschiebung des Spots Δs ergibt sich in paraaxialer Näherung zu

$$\Delta s = f \cdot \tan\alpha \,, \tag{1}$$

wobei f die Brennweite der Sammellinse 105 und $\alpha$ der Einfallswinkel sind; tan bedeutet die Tangensfunktion. Je nach Realisierung des Detektors kann die Fläche des Detektors 104 relativ klein sein, beispielsweise wenn fasergekoppelte Detektoren verwendet werden, d.h. das empfangene Licht in eine Glasfaser eingekoppelt wird und so zum eigentlichen Detektor weitergeleitet wird. In einem derartigen Fall kann wie bereits bei der Beschreibung von Fig. 15 kurz erwähnt eine Änderung des Einfallswinkels bzw. ein schräger Einfallswinkel, welcher sich beispielsweise beim Abtasten der Probenoberfläche 100 mit dem Lichtstrahl ergeben kann, dazu führen, dass der Spot 107 über den Rand des Detektors 104 hinauswandert, wodurch die Messung unterbrochen wird.

Wie bereits unter Bezugnahme auf Fig. 15 beispielhaft erläutert wird bei Ausführungsbeispielen der vorliegenden Erfindung die Richtung des Lichteinfalls bestimmt und ein verwendeter Detektor oder eine verwendete Detektoranordnung entsprechend nachgeführt, beispielsweise entsprechend dem Lichteinfallswinkel geneigt, um sicherzustellen, dass das von einer Sammeloptik wie der Sammellinse 105 aus Fig. 16 gebündelte Licht auch auf den entsprechenden Detektor fällt. Ein Detektor zum Bestimmen der Einfallsrichtung, welcher beispielsweise als weiterer Detektor 91 der Fig. 15 verwendet werden kann, ist schematisch in Fig. 17 dargestellt.

Die Detektoranordnung der Fig. 17 umfasst eine Sammellinse 111 sowie einen Detektor 112, welcher bei dem dargestellten Beispiel als Quadrantendiode oder Viersegmentfotodiode ausgestaltet ist.

Es ist zu bemerken, dass die Verwendung eines Quadrantendetektors, d.h. eines Detektors mit vier Segmenten, bei dem Ausführungsbeispiel von Fig. 17 lediglich als Beispiel zu verstehen ist, und auch eine andere Anzahl von Segmenten, d.h. eine andere Anzahl unabhängiger Fotodetektoren, verwendet werden kann, beispielsweise mehr als vier Fotodioden, um eine höhere Ortsauflösung zu ermöglichen. Auch andere positionsselektive Detektoren, beispielsweise CMOS- oder CCD-Detektoren mit einer Vielzahl von Bildelementen (sogenannte Pixel), können verwendet werden.

In Fig. 17 sind beispielhaft ein Lichtstrahl 110 in durchgezogenen Linien und ein Lichtstrahl 110' in gestrichelten Linien eingezeichnet, wobei die Lichtstrahlen 110 und 110' aus unterschiedlichen Richtungen auf die Linse 111 fallen. Wie in Fig. 17 zu sehen, führt dies auch zu unterschiedlichen Orten des entsprechenden gebündelten Spots auf dem Quadrantendetektor 112, in diesem Fall Spots in verschiedenen Quadranten. Aus den Differenzen der Signale jedes Quadranten bzw. jedes Segments des Detektors 112 kann entsprechend der obigen Gleichung (1) der Lichteinfallswinkel für die Detektoranordnung der Fig. 17 bestimmt werden. Unter Berücksichtigung des Abstands dieser Detektoranordnung, welche auch als sekundärer Detektorkanal bezeichnet werden kann, zu dem eigentlich für die Oberflächenvermessung benutzten Detektor (Detektor 104 der Fig. 16 bzw. Detektoren 61-64 der Fig. 15) kann auch der Lichteinfallswinkel für diesen Detektor, welcher auch als primärer Kanal bezeichnet werden kann, bestimmt werden, und der oder die Detektoren des primären Kanals können entsprechend nachgeführt werden.

Wie aus den oben diskutierten Variationen und Abwandlungen zu sehen ist, ist die vorliegende Erfindung nicht auf die dargestellten Ausführungsbeispiele begrenzt.

## Patentansprüche

1. Vorrichtung zur Bestimmung der Position eines Objekts (25; 33;191) in einem Raumbereich (28; 31), umfassend:

   mindestens eine Lichtquelle (3; 30; 126) zum Erzeugen mindestens eines Lichtstrahls,
   Lenkmittel (5, 7; 40; 42; 135; 214) zum Lenken des Lichtstrahls (22, 27; 35; 211) zu einem Reflektor,
   wobei die Form des Lichtstrahls derart gewählt ist, dass der Lichtstrahl (22, 27; 35; 211) nicht einen gesamten Bereich, in welchem sich der Reflektor befinden kann, erfasst,
   Detektormittel (13, 14; 123) zum Detektieren des von dem Reflektor reflektierten Lichtstrahls,
   Auswertemittel (15; 125, 127; 196) zum Bestimmen einer Position des Objekts (25; 33; 191) auf Basis des von den Detektormitteln (13, 14; 123) detektierten reflektierten Lichtstrahls, und
   Steuermittel (122, 128-132) zum Ansteuern der Lenkmittel (5, 7; 40; 42) derart, dass der mindestens eine kegelförmige Lichtstrahl auf denjenigen Teil des Bereichs (28; 31) gerichtet ist, in welchem sich der Reflektor befindet,
   **dadurch gekennzeichnet, dass** die Steuermittel (122, 128-132) ausgestaltet sind, die Lenkmittel (135) in Abhängigkeit von einer Amplitude eines Signals der Detektormittel (123) anzusteuern.

2. Vorrichtung nach Anspruch 1, wobei der Reflektor mit dem Objekt (25; 33; 191) gekoppelt ist, und wobei die mindestens eine Lichtquelle (3; 30; 126) stationär ist.

3. Vorrichtung nach Anspruch 1, wobei die Lenkmittel (5, 7; 40; 42; 135; 214) an dem Objekt befestigt sind, wobei der Reflektor stationär ist.

4. Vorrichtung nach Anspruch 3, wobei die Vorrichtung eine Mehrzahl von Reflektoren umfassend den Reflektor umfasst.

5. Vorrichtung nach einem der Ansprüche 1 bis 4, wobei die Vorrichtung zum Bestimmen dreier unabhängiger Längen und zur Bestimmung der Position des Objekts (25; 33; 191) durch Trilateration ausgestaltet ist.

6. Vorrichtung nach einem der Ansprüche 1-5, wobei die Lenkmittel (5, 7; 40; 42) einen beweglichen Spiegel (40) umfassen.

7. Vorrichtung nach einem der Ansprüche 1-6, wobei die Lenkmittel (5, 7; 40; 42) eine bewegliche Linse (42) zum Verändern einer Richtung des kegelförmigen Lichtstrahls (22, 27; 35) umfassen.

8. Vorrichtung nach einem der Ansprüche 1-7, wobei die mindestens eine Lichtquelle (3; 30) einen gepulsten Laser umfasst.

9. Vorrichtung nach einem der Ansprüche 1-8, weiter umfassend eine Optik (216) zum Aufweiten des Lichtstrahls (22, 27; 35).

10. Verfahren zur Bestimmung der Position eines Objekts (25;33) in einem Raumbereich (28; 31), umfassend:

Lenken mindestens eines Lichtstrahls in einen Teil eines Raumbereichs , in welchem sich ein Reflektor befindet,
Detektieren des von dem Reflektor reflektierten Lichtstrahls, und
Bestimmen der Position des Objekts (25; 33) auf Basis des detektierten reflektierten Lichtstrahls,
**gekennzeichnet durch**
Bestimmen eines Maßes für die Amplitude des von dem Objekt reflektierten Lichtstrahls beim Detektieren,
wobei das Lenken des mindestens einen Lichtstrahls in Abhängigkeit von dem ermittelten Maß für die Amplitude
erfolgt.

**Claims**

1. Apparatus for determining the position of an object (25; 33; 191) in a spatial zone (28; 31), comprising:

at least one light source (3; 30; 126) for generating at least one light beam,
guiding means (5, 7; 40; 42; 135; 214) for guiding the light beam (22, 27; 35; 211) to a reflector,
the shape of the light beam having been chosen in such a way that the light beam (22, 27; 35; 211) does not
register an entire zone in which the reflector may be located,
detector means (13, 14; 123) for detecting the light beam reflected from the reflector;
evaluating means (15; 125; 127; 196) for determining a position of the object (25; 33; 191) on the basis of the
reflected light beam detected by the detector means (13, 14; 123), and
control means (122, 128-132) for driving the guiding means (5, 7; 40; 42) in such a way that the at least one
conical light beam has been directed onto that part of the zone (28; 31) in which the reflector is located,
**characterised in that** the control means (122, 128-132) are configured to drive the guiding means (135) in a
manner depending on an amplitude of a signal of the detector means (123).

2. Apparatus according to Claim 1, wherein the reflector has been coupled with the object (25; 33; 191), and
wherein the at least one light source (3; 30; 126) is stationary.

3. Apparatus according to Claim 1, wherein the guiding means (5, 7; 40; 42; 135; 214) have been fastened to the
object, the reflector being stationary.

4. Apparatus according to Claim 3, the apparatus including a plurality of reflectors including the reflector.

5. Apparatus according to one of Claims 1 to 4, the apparatus having been configured for determining three independent
lengths and for determining the position of the object (25; 33; 191) by trilateration.

6. Apparatus according to one of Claims 1 to 5, wherein the guiding means (5, 7; 40; 42) include a movable mirror (40).

7. Apparatus according to one of Claims 1 to 6, wherein the guiding means (5, 7; 40; 42) include a movable lens (42)
for changing a direction of the conical light beam (22, 27; 35).

8. Apparatus according to one of Claims 1 to 7, wherein the at least one light source (3; 30) includes a pulsed laser.

9. Apparatus according to one of Claims 1 to 8, further including an optical system (216) for expanding the light beam
(22, 27; 35).

10. Method for determining the position of an object (25; 33) in a spatial zone, comprising:

guiding at least one light beam into a part of a spatial zone in which a reflector is located,
detecting the light beam reflected from the reflector, and
determining the position of the object (25; 33) on the basis of the detected reflected light beam,
**characterised by**
determining a measure of the amplitude of the light beam reflected from the object in the course of detecting,
wherein the guiding of the at least one light beam is effected in a manner depending on the ascertained measure
of the amplitude.

**Revendications**

1.  Dispositif de détermination de la position d'un objet (25 ; 33 ; 191) dans une région spatiale (28 ; 31), comportant :

    au moins une source de lumière (3 ; 30 ; 126) pour la génération d'au moins un faisceau lumineux,
    des moyens de déviation (5, 7 ; 40 ; 42 ; 135 ; 214) pour la déviation du faisceau lumineux (22, 27 ; 35 ; 211) vers un réflecteur,
    la forme du faisceau lumineux étant choisie de sorte que le faisceau lumineux (22, 27 ; 35 ; 211) ne couvre pas une région complète dans lequel peut se trouver le réflecteur,
    des moyens de détection (13, 14 ; 123) pour la détection du faisceau lumineux réfléchi par le réflecteur,
    des moyens d'évaluation (15 ; 125, 127 ; 196) pour la détermination d'une position de l'objet (25 ; 33 ; 191) sur la base du faisceau lumineux réfléchi détecté par les moyens de détection (13, 14 ; 123), et
    des moyens de commande (122, 128-132) pour la commande des moyens de déviation (5, 7 ; 40 ; 42) de manière telle que le ou les faisceaux lumineux de forme conique soient dirigés sur la partie de la région (28 ; 31) dans laquelle se trouve le réflecteur,
    **caractérisé en ce que** les moyens de commande (122, 128-132) sont agencés pour commander les moyens de déviation (135) en fonction d'une amplitude d'un signal des moyens de détection (123).

2.  Dispositif selon la revendication 1, le réflecteur étant couplé à l'objet (25 ; 33 ; 191) et la ou les sources de lumière (3 ; 30 ; 126) étant stationnaires.

3.  Dispositif selon la revendication 1, les moyens de déviation (5, 7 ; 40 ; 42 ; 135 ; 214) étant fixés à l'objet, le réflecteur étant stationnaire.

4.  Dispositif selon la revendication 3, le dispositif comportant une pluralité de réflecteurs entourant le réflecteur.

5.  Dispositif selon l'une quelconque des revendications 1 à 4, le dispositif est agencé pour la détermination de trois longueurs indépendantes et pour la détermination de la position de l'objet (25 ; 33 ; 191) par trilatération.

6.  Dispositif selon l'une quelconque des revendications 1 à 5, les moyens de déviation (5, 7 ; 40 ; 42) comportant un miroir mobile (40).

7.  Dispositif selon l'une quelconque des revendications 1 à 6, les moyens de déviation (5, 7 ; 40 ; 42) comportant une lentille mobile (42) pour la modification d'une direction du faisceau lumineux de forme conique (22, 27, 35).

8.  Dispositif selon l'une quelconque des revendications 1 à 7, la ou les sources de lumière (3 ; 30) comportant un laser pulsé.

9.  Dispositif selon l'une quelconque des revendications 1 à 8, comportant en outre une optique (216) pour l'élargissement du faisceau lumineux (22, 27 ; 35).

10. Procédé de détermination de la position d'un objet (25 ; 33) dans une région spatiale (28 ; 31), comprenant les étapes suivantes :

    déviation d'au moins un faisceau lumineux dans une partie d'une région spatiale dans lequel se trouve un réflecteur,
    détection du faisceau lumineux réfléchi par le réflecteur, et
    détermination de la position de l'objet (25 ; 33) sur la base du faisceau lumineux réfléchi détecté,
    **caractérisé par**
    la détermination d'une mesure pour l'amplitude du faisceau lumineux réfléchi par l'objet lors de la détection,
    la déviation du ou des faisceaux lumineux ayant lieu en fonction de la mesure déterminée pour l'amplitude.

Fig. 1

EP 2 475 953 B1

Fig. 2

Fig. 3

Fig. 4

Fig. 5

Fig. 6

EP 2 475 953 B1

54a  54b
53

Fig. 7B

54d  54c

54

53

51

59

57

52

Fig. 7A

54a
54b
54c
54d

58

57

Fig. 8

Fig. 9B

Fig. 9A

Fig. 10A

Fig. 10B

Fig. 10C

Fig. 11A

Fig. 11B

Fig. 11C

Fig. 12

Fig. 13

Fig. 14

Fig. 15

EP 2 475 953 B1

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045386
- WO 2010025845 A2
- WO 03062744 A1

**In der Beschreibung aufgeführte Nicht-Patentliteratur**

- **K. MINOSHIMA ; H. MATSUMOTO.** High-accuracy measurement of 240-m distance in an optical tunnel by use of a compact femtosecond laser. *Applied Optics,* 2000, vol. 39 (30), 5512-5517